# EUROPÄISCHE PATENTANMELDUNG

(11) **EP 4 375 641 A1**
(43) Veröffentlichungstag der Anmeldung: **29.05.2024**
(21) Anmeldenummer: 23170973.4
(22) Anmeldetag: 02.05.2023
(51) Int. Cl.: G01N 15/06, G08B 17/107, H05B 45/10, H05B 45/50, G01N 15/02

(54) **KLASSIFIZIERUNG VON PARTIKELN MITTELS SPEKTRALANALYSE**

(30) Priorität: 22.11.2022 EP 22208824
(71) Anmelder: Wagner Group GmbH, 30853 Langenhagen (DE)
(72) Erfinder: FILIPPINI, Daniel, 30900 Wedemark (DE); HARTWIG, Jonas, 30851 Langenhagen (DE)
(74) Vertreter: Götz, Gudrun Veronika

(57) **Zusammenfassung**

Die Erfindung betrifft ein Verfahren zur Klassifizierung von mittels einer Partikeldetektionseinheit (200) detektierten Partikeln, welche Partikeldetektionseinheit (200) einen Lichtsender (210) zum Aussenden von Licht und einen Lichtempfänger (220) zum Erfassen von zumindest einem Teil des ausgesendeten Lichts aufweist, wobei der Lichtsender (210) und der Lichtempfänger (220) einen Detektionsbereich (DB) definierend zueinander ausgerichtet sind. In dem Verfahren werden innerhalb des Detektionsbereichs (DB) detektierte Partikel mittels Spektralanalyse klassifiziert, wobei
- mindestens ein erstes Lichtintensitätssignal (I₁) und ein zweites Lichtintensitätssignal (I₂), welche auf von dem Lichtempfänger (220) erfasstem Licht einer ersten charakteristischen Wellenlänge (λ₁) und einer von der ersten charakteristischen Wellenlänge (λ₁) abweichenden zweiten charakteristischen Wellenlänge (λ₂) basieren, ermittelt werden,
- ein weiteres, ein Referenz-Lichtintensitätssignal (I₀) ermittelt wird, welches auf von dem Lichtempfänger (220) erfasstem Licht einer charakteristischen Referenz-Wellenlänge (λ₀) basiert, die von der ersten und der zweiten charakteristischen Wellenlänge (λ₁, λ₂) abweicht,
- das mindestens erste und zweite Lichtintensitätssignal (I₁, I₂), jeweils in Relation, insbesondere ins Verhältnis zu dem Referenz-Lichtintensitätssignal (I₀) gesetzt wird,
- die so erhaltenen Relationswerte (I₁/I₀, I₂/I₀) in eine Klassifizierungskarte (130) eingeordnet werden, und
- anhand der Einordnung innerhalb der Klassifizierungskarte (130) eine Zuordnung der detektierten Partikel zu einer definierten Partikelklasse (S₁, S₂, S₃) erfolgt.

## Beschreibung

Die Erfindung betrifft ein Verfahren zur Klassifizierung von mittels einer Partikeldetektionseinheit detektierten Partikeln, welche Partikeldetektionseinheit einen Lichtsender zum Aussenden von Licht und einen Lichtempfänger zum Erfassen von zumindest einem Teil des ausgesendeten Lichts, insbesondere einen Streulicht- und/oder Durchlichtanteil aufweist.

Die Erfindung betrifft außerdem eine Partikeldetektionseinheit, die zur Durchführung des Klassifizierungsverfahrens geeignet ist, mit einem Lichtsender zum Aussenden von Licht und einem Lichtempfänger zum Erfassen von zumindest einem Teil des ausgesendeten Lichts, insbesondere einen Streulichtund/oder Durchlichtanteil sowie einem signalübertragend mit dem Lichtsender und dem Lichtempfänger verbundenen Steuerungsmodul. Der Lichtsender und der Lichtempfänger sind einen Detektionsbereich definierend zueinander ausgerichtet, und das Steuerungsmodul ist zur Detektion von im Detektionsbereich befindlichen Partikeln anhand des von dem Lichtempfänger erfassten Lichts konfiguriert.

Derartige Partikeldetektionseinheiten werden oftmals zur Branderkennung, insbesondere in Gebäuden, Fahrzeugen, auf Schiffen usw. eingesetzt. Hierbei werden in der Umgebungsluft eines Überwachungsbereichs enthaltene Partikel, bspw. Rauchpartikel oder auch Aerosole, die auf einen Brand oder dessen Entstehung schließen lassen, mittels der Partikeldetektionseinheit erkannt. Bei einem Überwachungsbereich handelt es sich in der Regel um einen zu überwachenden Bereich, in dem sich Personen aufhalten, (wertvolle) Güter lagern und/oder eine erhöhte Brandgefahr besteht. Überwachungsbereiche können Teile eines Gebäudes, wie Räume, Lagerräume oder Serverräume sein, Teile eines Fahrzeugs, bspw. eines Schiffs, Zugs, Busses oder Flugzeugs, wie Fahrgastabteile oder Maschinenräume, aber auch ein Bereich in unmittelbarer Umgebung oder innerhalb eines Objekts, wie einer Maschine oder eines Schaltschranks. Ein bekannter Anwendungsfall ist der sogenannte Deckenrauchmelder, auch punktförmiger Rauchmelder genannt, welcher bspw. an der Zimmerdecke eines Raums oder Zimmers eines Gebäudes montiert wird.

Das Gehäuseinnere, also die Detektionskammer des Deckenrauchmelders, ist fluidleitend mit der Umgebungsluft verbunden. Der Detektionsbereich wird durch Überlagerung des Lichtpfads des Lichtsenders und des Einfallsbereichs des Lichtempfängers innerhalb der Detektionskammer definiert. Im Detektionsbereich befindliche Partikel werden durch das vom Lichtsender ausgesendete Licht angestrahlt und können entweder anhand des durch die Partikel reduzierten Durchlichts (Durchlichtdetektor) oder aber anhand des an den Partikeln gestreuten Streulichts (Streulichtdetektor) vom Lichtempfänger erkannt werden.

Hierzu ist der Lichtempfänger derart auf den durch den Lichtsender definierten Lichtpfad ausgerichtet, dass dessen Einfallsbereich den Lichtpfad schneidet. Der Detektionsbereich ist folglich ein Schnittbereich, welcher durch Überlagerung des Lichtpfads des Lichtsenders, bzw. dessen Lichtquelle und des Einfallsbereichs des Lichtempfängers bzw. dessen Lichtsensor gebildet wird. Bei einem Durchlichtdetektor ist der Lichtempfänger innerhalb des Lichtpfads des Lichtsenders und gegenüberliegend zu diesem angeordnet, der Winkel zwischen der optischen Achse des Lichtsenders und des Lichtempfängers entspricht 0°. Bei einem Streulichtdetektor schließen die optische Achse des Lichtsenders und die des Lichtempfängers einen Winkel größer 0°, den sogenannten Streulichtwinkel ein. Das Steuerungsmodul ist zur Erkennung und Auswertung von im Detektionsbereich befindlichen Partikeln anhand des von dem Lichtempfänger übermittelten Lichtintensitätssignals konfiguriert.

Ein anderer Anwendungsfall sind Ansaugrauchmelder, auch als Ansaugpartikelerkennungssysteme bezeichnet. Ein Ansaugpartikelerkennungssystem umfasst mindestens eine Rohr- und/oder Schlauchleitung, die über eine oder mehrere Ansaugöffnungen zur jeweiligen Entnahme einer Fluid-, insbesondere einer Luftprobe, in einen oder mehrere Überwachungsbereiche mündet. Mehrere Überwachungsbereiche können zum Beispiel in unterschiedlichen Bereichen eines gemeinsamen Raums, wie einer (großen) Lagerhalle angeordnet sein, aber auch in jeweiligen Räumen eines Gebäudes oder Abschnitten eines Fahrzeugs, wie den Fahrgastkabinen eines Schiffes. Die entnommenen Fluidproben werden entlang der Rohr- und/oder Schlauchleitung, einem Strömungspfad folgend, zur Partikeldetektionseinheit geführt und durch deren Detektionsbereich geleitet.

Eine als Streulichtdetektor ausgebildete Partikeldetektionseinheit für ein Ansaugpartikelerkennungssystem ist beispielsweise aus der US 9,128,047 B2 bekannt. Die Partikeldetektionseinheit weist eine Detektionskammer auf, die über einen Einlass und einen Auslass verfügt. Der durch das Ansaugsystem erzeugte Luftstrom durchströmt die Detektionskammer, sodass angesaugte Luftproben über den Einlass in die Kammer eintreten und diese über den Auslass wieder verlassen. Ferner umfasst die Detektionskammer zwei Lichtsender, die zur Beleuchtung des Luftstroms vorgesehen sind. Licht, welches an im Luftstrom enthaltenen Partikeln gestreut wird, soll mittels zweier Lichtempfänger erfasst werden. Die beiden Lichtempfänger sind dabei so ausgerichtet, dass deren Sichtfelder bzw. Einfallsbereiche einander nicht überlagern, aber einen jeweiligen Schnittbereich mit dem Lichtvolumen bzw. Lichtpfad der Lichtsender bilden. Durch diese Ausrichtung werden innerhalb der Detektionskammer zwei zu untersuchende und voneinander örtlich unabhängige Detektionsbereiche definiert. Zur weiteren Auswertung der detektierten Partikel senden die Lichtsender Licht unterschiedlicher Wellenlänge aus. Anhand der jeweiligen Intensität des in den Detektionsbereichen erfassten Lichts sollen charakteristische Eigenschaften der im Detektionsbereich befindlichen Partikel bestimmt werden. Als Lichtsender kann beispielsweise eine Leuchtdiode und als Lichtempfänger eine Photodiode verwendet werden.

Leuchtdioden oder auch lichtemittierende Dioden (LED) sind Dioden, die bei elektrischem Stromfluss Licht aussenden. Ein gängiger Aufbau einer Leuchtdiode umfasst den LED-Chip, die eigentliche Diode, welche elektrischen Strom in einer Richtung, der sogenannten Durchlassrichtung passieren lässt und in der anderen Richtung sperrt. Leuchtdioden sind derart konfiguriert, dass bei Stromfluss durch den LED-Chip in Durchlassrichtung Licht ausgesendet bzw. emittiert wird, der LED-Chip fungiert also als Lichtquelle der Leuchtdiode. Ein weiterer Bestandteil der Leuchtdiode ist das Gehäuse, welches zumeist aus einem transparenten Material wie Kunststoff oder Glas besteht und zur Bündelung bzw. Ausrichtung des ausgesendeten Lichts entlang einer Rotationsoder Symmetrieachse, auch als "optische Achse" bezeichnet, dient. Anstelle eines Gehäuses kann aber auch eine Linse zur Bündelung bzw. Ausrichtung vorgesehen und unmittelbar vor dem LED-Chip angeordnet sein. Das von der Leuchtdiode ausgesendete und entlang der optischen Achse gebündelte Licht definiert einen Lichtpfad und ist vergleichbar bspw. mit dem Lichtkegel einer Taschenlampe. Die optische Achse der Leuchtdiode bzw. des Lichtsenders entspricht in der Regel der Zentral- oder Rotationsachse des definierten Lichtpfads. Mittels zweier Anschlüsse lässt sich die Leuchtdiode mit einer Spannungsquelle oder Stromquelle verbinden. Leuchtdioden können einen oder mehrere LED-Chips, also mehrere Lichtquellen im selben Gehäuse aufweisen.

In physikalischer Betrachtung entspricht das von einer Lichtquelle ausgesendete Licht einer Vielzahl einzelner Lichtstrahlen. Im Sinne dieser Erfindung wird unter dem Begriff "Lichtpfad" daher derjenige Raum oder Bereich verstanden, den die Gesamtheit aller von einer einzelnen Lichtquelle ausgesendeten Lichtstrahlen beansprucht. Der Lichtpfad einer Lichtquelle wird also durch das von der Lichtquelle ausgesendete Licht, und zwar unabhängig vom tatsächlichen Betriebszustand der Lichtquelle, definiert. Anders ausgedrückt ist der Lichtpfad auch vorhanden, sofern die Lichtquelle ausgeschaltet ist, d. h. kein Licht aussendet. Ein "gemeinsamer Lichtpfad" ist im Sinne dieser Erfindung der Überlagerungsbereich, innerhalb dessen sich die von zwei oder mehr Lichtquellen jeweils ausgesendeten Lichtstrahlen, d. h. deren jeweilige Lichtpfade überlagern.

Um das von einer oder mehreren Lichtquellen ausgesendete Licht erfassen zu können, ist die Diode bzw. der Photo-Chip der Photodiode als Lichtsensor konfiguriert, sodass bei Lichteinfall ein elektrischer Strom bzw. eine elektrische Spannung erzeugt wird. Anders als Leuchtdioden senden Photodioden also kein Licht aus, sondern können einfallendes Licht, insbesondere einfallende Lichtstrahlen erfassen und in elektrische Signale umwandeln. Entsprechend dem Lichtpfad einer Leuchtdiode, welcher durch die Gesamtheit der ausgesendeten Lichtstrahlen definiert wird, wird der sogenannte "Einfallsbereich" einer Photodiode durch die Gesamtheit der von der Photodiode erfassbaren Lichtstrahlen definiert. Die optische Achse der Photodiode bzw. des Lichtsensors entspricht in der Regel der Zentral- oder Rotationsachse des definierten Einfallsbereichs. Ein "gemeinsamer Einfallsbereich" ist im Sinne dieser Erfindung der Überlagerungsbereich, innerhalb dessen sich die jeweiligen Einfallsbereiche zweier oder mehr Lichtsensoren überlagern.

Das Licht einer Lichtquelle setzt sich in der Regel aus elektromagnetischer Strahlung unterschiedlicher Wellenlängen zusammen. Ein LED-Chip sendet zum Beispiel Licht mit einer zentralen oder charakteristischen Wellenlänge und einer Verteilung um diese charakteristische Wellenlänge im Bereich von etwa +/- 30 nm aus. Bei Infrarot-Dioden wird beispielsweise die charakteristische Wellenlänge im Infrarotbereich (z. B. 840 nm, 880 nm, 940 nm usw.) angegeben. Das von der Diode ausgesendete Licht entspricht aber nicht ausschließlich dieser angegebenen, charakteristischen Wellenlänge, sondern kann auch in einem Bereich von etwa +/- 30 nm um die charakteristische Wellenlänge mit ausreichend hoher Lichtintensität messtechnisch erfasst werden. Bei einem Laser als Lichtquelle ist der Wellenlängenbereich um die charakteristische Wellenlänge wesentlich enger und liegt üblicherweise im Bereich von nur +/- 1 nm. Die Gesamtheit der von der Lichtquelle gesendeten Wellenlängen lässt sich als sogenanntes Spektralband abbilden, welches die Lage der elektromagnetischen Strahlung im elektromagnetischen Spektrum darstellt, wobei eine Wellenlänge einer Spektrallinie entspricht. Die Gesamtheit aller Spektrallinien bildet ein für das für von der Lichtquelle gesendete Licht charakteristisches Spektralband. Auch ein Lichtsensor ist in der Regel zum Erfassen von Licht mehrerer, unterschiedlicher Wellenlängen ausgebildet. Folglich kann auch dem von einem Lichtsensor erfassbaren Licht ein charakteristisches Spektralband bzw. eine charakteristische Wellenlänge zugeordnet werden.

Aus der WO 2020/247187 A1 ist ein Deckenrauchmelder mit einem Gehäuse und einer darin ausgebildeten Detektionskammer bekannt. Mehrere, als jeweilige Lichtsender ausgebildete Lichtquellen senden Licht unterschiedlicher Wellenlänge ins Innere der Detektionskammer. Hierzu sollen mehrere LED-Chips auf einer gemeinsamen Leiterplatte angeordnet sein. Jeder LED-Chip ist als separater Lichtsender mit einem eigenen Gehäuse und einer eigenen Linse ausgebildet, um das ausgesendete Licht entlang eines kegelförmigen Lichtpfads zu bündeln bzw. auszurichten. Die zentrale Achse dieses Lichtkegels entspricht der optischen Achse des Lichtsenders. Das von den Lichtsendern gesendete Licht kann über eine Photodiode erfasst werden. Die optische Achse der Photodiode und die optischen Achsen der Lichtsender schließen die, für die jeweiligen Lichtsender spezifischen und zur Bestimmung von Partikeleigenschaften erforderlichen Streulichtwinkel (Vorwärts- und Rückwärtsstreuung) ein.

Die europäische Patentschrift EP 3 029 646 B1 offenbart ebenfalls einen Deckenrauchmelder mit Lichtquellen unterschiedlicher charakteristischer Wellenlänge. Gemäß der Offenbarung sind hier jedoch zwei einzelfarbige LED-Chips zu einer einzigen Leuchtdiode, also einem einzigen Lichtsender mit zwei Lichtquellen zusammengefasst. Die LED-Chips sind dabei nebeneinander auf einem Chipträger angeordnet, sodass die jeweilige geometrische Mitte der beiden LED-Chips einen gleichen Abstand zur optischen Hauptachse der Leuchtdiode aufweist. Das von den LED-Chips jeweils gesendete Licht überlagert einander und definiert so einen gemeinsamen Lichtpfad entlang der optischen Hauptachse der Leuchtdiode. Ein Photosensor ist auf den gemeinsamen Lichtpfad ausgerichtet, sodass die optische Hauptachse der Leuchtdiode und die optische Empfängerachse des Photosensors einen Streulichtwinkel miteinander einschließen. Durch die Unterbringung zweier LED-Chips im Gehäuse einer einzigen Leuchtdiode soll eine Streulichtanordnung mit nur einem Streulichtwinkel für beide Farben der LED-Chips erreicht werden.

Aus der EP 3 779 909 B1 ist wiederum eine Feuerdetektionsvorrichtung in der Art eines Deckenrauchmelders, mit einer ersten und einer zweiten Lichtemissionseinheit, die einen jeweiligen Streulichtwinkel mit einer Lichtempfangseinheit einschließen, bekannt. Aufgrund der voneinander abweichenden Streulichtwinkel kann die Lichtempfangseinheit ein für die erste und die zweite Lichtemissionseinheit jeweils spezifisches Lichtempfangssignal ausgeben. Um die Art des detektierten Rauchs zu bestimmen, verfügt die Feuerdetektionsvorrichtung ferner über eine Identifikationseinheit. Die Identifikationseinheit ist dazu ausgelegt, die Art von Rauch anhand des Ausgabeverhältnisses der Lichtempfangssignale und anhand deren Anstiegsrate zu bestimmen. Nachteilig ist hierbei, dass, um eine einigermaßen reproduzierbare Bestimmung der Art des Rauchs zu gewährleisten, auch die Anstiegsrate und somit eine zeitliche Komponente zumindest eines Lichtempfangssignals zu berücksichtigen ist. Hierdurch wird die Auswertung des erhaltenen Signals nicht nur komplizierter, sondern auch zeitlich verzögert.

Schließlich beschreibt die EP 3 494 561 B1 einen photoelektrischen Rauchdetektor, der dazu in der Lage sein soll, kleinteilige Partikel, die durch ungefährliche Aktivitäten, wie das Braten von Burgern, Rösten von Brot usw. entstehen, von auf eine Brandgefahr hinweisendem Rauch zu unterscheiden und so die Vorgaben der US-amerikanischen Standards UL 217-8 und UL 268-7 zu erfüllen. Demnach müssen Rauchmelder nämlich in der Lage sein, einen durch Kochen oder Braten verursachten Fehlalarm zu vermeiden (sogenannter "hamburger test"). Hierzu umfasst der Rauchdetektor eine ersten, zweiten und dritten, jeweils als Leuchtdiode ausgebildeten Lichtemitter, einen Lichtempfänger sowie eine Steuerung. Der Lichtempfänger soll von den Lichtemittern ausgesendetes und an Partikeln gestreutes Licht entlang einer lichtempfangenden Achse erfassen und jeweilige, den Lichtemittern entsprechende Ausgabesignale ausgeben. Der erste und der zweite Lichtemitter sind dabei so angeordnet, dass deren jeweilige optische Achse mit der lichtempfangenden Achse des Lichtempfängers denselben, ersten Streulichtwinkel einschließt, zur Unterscheidung der Ausgabesignale sendet der erste Lichtemitter Licht im infraroten Wellenlängenbereich und der zweite Lichtemitter Licht im blauen Wellenlängenbereich aus. Der dritte Lichtemitter sendet ebenfalls Licht im infraroten Wellenlängenbereich aus, dessen Ausgabesignal soll jedoch anhand eines von dem ersten Lichtemitter abweichenden Streulichtwinkels identifiziert werden. Die vom Lichtempfänger ausgegebenen Signale werden mittels der Steuerung ausgewertet, wobei ein jeweiliges Verhältnis des ersten zum zweiten Ausgabesignal, des zweiten zum dritten Ausgabesignal und des ersten zum dritten Ausgabesignal gebildet wird. Nachteilig ist hierbei der komplizierte Aufbau, mit insgesamt drei Lichtsendern, die teils unterschiedliche Streulichtwinkel mit dem Lichtempfänger einschließen.

Es ist daher die Aufgabe der vorliegenden Erfindung, die Nachteile aus dem Stand der Technik zu eliminieren und eine kompakte und platzsparende Partikeldetektionseinheit mit möglichst wenig Komponenten sowie ein Klassifizierungsverfahren bereitzustellen, die es ermöglichen, detektierte Partikel zuverlässig und reproduzierbar zu klassifizieren.

Die Aufgabe wird gelöst durch ein Verfahren zur Klassifizierung gemäß Anspruch 1 und eine Partikeldetektionseinheit gemäß Anspruch 12.

Ein erfindungsgemäßes Klassifizierungsverfahren der eingangs näher beschriebenen Art kennzeichnet sich dadurch, dass mindestens ein erstes Lichtintensitätssignal und ein zweites Lichtintensitätssignal, welche auf von dem Lichtempfänger erfasstem Licht einer ersten charakteristischen Wellenlänge und einer von der ersten charakteristischen Wellenlänge abweichenden zweiten charakteristischen Wellenlänge basieren, ermittelt werden, und zusätzlich dazu ein weiteres, nämlich ein Referenz-Lichtintensitätssignal ermittelt wird, welches auf von dem Lichtempfänger erfasstem Licht einer charakteristischen Referenz-Wellenlänge basiert, die von der ersten und der zweiten charakteristischen Wellenlänge, und etwaigen weiteren (einer dritten, vierten usw.) charakteristischen Wellenlängen abweicht.

Das mindestens erste und das zweite Lichtintensitätssignal, und etwaige weitere Lichtintensitätssignale, werden jeweils in Relation, insbesondere ins Verhältnis zu dem einen, d. h. demselben Referenz-Lichtintensitätssignal gesetzt, und die so erhaltenen Relationswerte in eine Klassifizierungskarte eingeordnet. Anhand der Einordnung innerhalb der Klassifizierungskarte erfolgt schließlich eine Zuordnung der detektierten Partikel zu einer definierten Partikelklasse.

Im Sinne der Erfindung werden also verschiedene Lichtintensitätssignale ermittelt, die auf jeweiligem Licht unterschiedlicher Wellenlänge basieren. Jedes Lichtintensitätssignal gibt dabei die Intensitätsverteilung des erfassten Lichts im elektromagnetischen Spektrum an und enthält Informationen über die jeweiligen Wellenlängen und deren Intensität. Die ermittelte Lichtintensität basiert dabei auch auf der Anzahl bzw. der Menge der im Detektionsbereich befindlichen Partikel, an denen entweder vom Lichtempfänger empfangenes Streulicht gestreut worden ist oder die vom Lichtempfänger empfangenes Durchlicht reduziert haben. Die Informationen über die Wellenlängen hängen bspw. von den jeweils verwendeten Lichtquellen oder entsprechenden Filtern, insbesondere Farbfiltern ab und können zur Bestimmung von Partikeleigenschaften, wie Größe, Oberflächenbeschaffenheit oder Farbe genutzt werden. Anhand solcher Partikeleigenschaften können dann wiederum Rückschlüsse auf die Art von im Detektionsbereich detektierten Partikeln gezogen werden, insbesondere um festzustellen, ob es sich um Rauchpartikel oder Aerosole handelt, die auf einen Brand bzw. dessen Entstehung hinweisen, oder ob lediglich eine Täuschungsgröße vorliegt, bspw. durch das Zubereiten von Speisen verursacht.

Die ermittelten Lichtintensitätssignale sind dabei nicht auf das erste und das zweite Lichtintensitätssignal oder auf nur zwei charakteristische Wellenlängen beschränkt. Bedarfsweise können weitere unterschiedliche oder auch gleiche Lichtintensitätssignale ermittelt werden, welche dann auf Licht einer dritten bzw. vierten charakteristischen Wellenlänge usw. basieren. Zum Beispiel ist es denkbar zwei weitere, dritte Lichtintensitätssignale und/oder ein weiteres, drittes Lichtintensitätssignal und ein weiteres, viertes Lichtintensitätssignal zu ermitteln. Durch die Ermittlung weiterer Lichtintensitätssignale können Genauigkeit und Spezifität des Klassifizierungsverfahrens weiter verbessert werden. Licht unterschiedlicher charakteristischer Wellenlänge kann zum Beispiel durch die Verwendung verschiedenfarbiger Lichtquellen oder aber mit nur einer oder mehreren gleichfarbigen Lichtquellen in Kombination mit Filtern, insbesondere Farbfiltern, erzeugt werden. Die Filter können dann entweder dem Lichtempfänger zugeordnet, also auf "Lichtempfängerseite" vorgesehen oder dem Lichtsender zugeordnet, also auf "Lichtsenderseite" vorgesehen sein. Vorzugsweise sind alle Lichtquellen zu einem einzigen Lichtsender bzw. alle Filter oder Lichtsensoren zu einem einzigen Lichtempfänger zusammengefasst.

Im Sinne der Erfindung ist weiterhin vorgesehen, innerhalb des Detektionsbereichs detektierte Partikel mittels Spektralanalyse zu klassifizieren. Hierzu werden jeweilige, insbesondere unterschiedliche Lichtintensitätssignale ermittelt und die ermittelten Lichtintensitätssignale jeweils zu demselben, dem Referenz-Lichtintensitätssignal in Relation gesetzt. Ein solches "in Relation setzen" oder "ins Verhältnis setzen" eines ermittelten Lichtintensitätssignals jeweils zu einem gleichartigen, vorab definierten Lichtintensitätssignal, dem Referenz-Lichtintensitätssignal, entspricht einer Art Skalierung, bei der die auf der Menge oder Anzahl von im Detektionsbereich befindlichen Partikeln basierenden Intensitätsinformationen auf den aktuell gemessenen Gesamtpegel aller ermittelten Lichtintensitätssignale angepasst bzw. skaliert werden. Vorzugsweise werden alle Lichtintensitätssignale in einem einzigen, demselben Detektionsbereich ermittelt, sodass die jeweiligen Signale auch auf denselben, darin befindlichen Partikeln bzw. deren Anzahl oder Menge basieren.

Durch Bildung einer Relation oder eines Verhältnisses jeweiliger Lichtintensitätssignale mit jeweils demselben Referenz-Lichtintensitätssignal lässt sich also dieser Anzahl- oder Mengenanteil eliminieren, wodurch der Informationsgehalt des Lichtintensitätssignals auf die zur Klassifizierung, d. h. zur Bestimmung der Partikelart wesentlichen Information, bspw. Partikeleigenschaften, wie Größe, Oberflächenbeschaffenheit oder Farbe reduziert wird. Ein Relationswert entspricht also einem Lichtintensitätssignal, dessen Informationsgehalt auf die Partikeleigenschaften reduziert ist. Auf diese Weise lässt sich das Klassifizierungsverfahren wesentlich vereinfachen, wodurch die Ergebnisse schneller und mit höherer Sicherheit vorliegen.

Nach einer vorteilhaften Verfahrensvariante werden die aus den Lichtintensitätssignalen gebildeten Relationswerte jeweiligen, die Klassifizierungskarte definierenden Achsen zugeordnet.

Bei beispielsweise einem ersten und einem zweiten Lichtintensitätssignal, welches auf Licht einer ersten bzw. einer zweiten charakteristischen Wellenlänge basiert, wird eine zweidimensionale Klassifizierungskarte definiert, insbesondere ein zweidimensionales Koordinatensystem aufgespannt. Der gebildete Relationswert aus dem ersten Lichtintensitätssignal zu dem Referenz-Lichtintensitätssignal ist dann einer der Achsen, bspw. der Ordinate zugeordnet, und der gebildete Relationswert aus dem zweiten Lichtintensitätssignal zu dem Referenz-Lichtintensitätssignal der anderen Achse, also bspw. der Abszisse. Die gebildeten Relationswerte entsprechen also den Koordinaten eines auf einer charakteristischen Wellenlänge basierenden Lichtintensitätssignals innerhalb der Klassifizierungskarte.

Die Anzahl der gebildeten Relationswerte legt folglich die Dimension der Klassifizierungskarte fest, welche somit direkt von der Anzahl unterschiedlicher charakteristischer Wellenlängen, die vom Lichtempfänger erfasst werden, abhängt. Bei Verwendung von Licht dreier unterschiedlicher charakteristischer Wellenlängen sowie einer davon abweichenden, charakteristischen Referenz-Wellenlänge und der entsprechenden Erfassung dreier unterschiedlicher Lichtintensitätssignale sowie des Referenz-Lichtintensitätssignals, könnte also eine dreidimensionale Klassifizierungskarte oder ein dreidimensionales Koordinatensystem gebildet werden. Höherdimensionale Klassifizierungskarten können mithilfe multivariater Methoden oder selbstlernenden Algorithmen bewertet werden.

Grundsätzlich ist es denkbar, dass die Erstellung von in der Klassifizierungskarte enthaltenen und jeweiligen Partikelklassen entsprechenden Bereichen, welchen die detektierten Partikel zugeordnet werden, durch einen Lernprozess eines selbstlernenden Computerprogramms bzw. einer künstlichen Intelligenz während der Inbetriebnahme und/oder des laufenden Betriebs des Verfahrens erfolgt. Nachteilig ist dabei allerdings, dass die Einteilung der Bereiche, bzw. die zugrunde liegenden Parameter und Zusammenhänge nicht einfach nachvollzogen werden können, da derartige Computerprogramme autark agieren, man spricht hier auch von einer "Black Box".

Nach einer Variante des erfindungsgemäßen Verfahrens ist es deshalb vorteilhaft, dass in der Klassifizierungskarte enthaltene und einer definierten Partikelklasse zugeordnete Bereiche auf physikalischen Größen basierend, insbesondere vorab ermittelt werden.

Zum Beispiel kann eine solche Referenzbildung vor der Inbetriebnahme einer Partikeldetektionseinheit erfolgen, indem die zu bestimmende Partikelklasse, also bspw. Rauchpartikel oder Aerosole, die auf einen Brand oder dessen Entstehung hinweisen, gezielt in den Detektionsbereich eingebracht wird. Die dabei erhaltenen Relationswerte werden dann in die Klassifizierungskarte eingetragen und bilden dort eine Art Cluster, sind in bestimmten Bereichen der Klassifizierungskarte also häufiger vorhanden. Anhand der Verteilung innerhalb der Klassifizierungskarte, insbesondere anhand der gebildeten Cluster, wird ein der Partikelklasse, zum Beispiel dem auf einen Brand hinweisenden Rauch, entsprechender Bereich festgelegt, der eine Zuordnung zu dieser Partikelklasse mit ausreichend hoher Wahrscheinlichkeit (bspw. > 95,0 %) erlaubt. Vorteilhafterweise werden die Bereiche dabei derart um ein Zentrum herum gebildet, dass das Zentrum der höchsten Wahrscheinlichkeit entspricht (bspw. > 99,9 %) und die Begrenzung eines Bereichs der minimal erforderlichen Wahrscheinlichkeit (bspw. = 95,0 %). Ausgehend vom Zentrum, hin zur Begrenzung eines Bereichs verläuft also die Wahrscheinlichkeit, dass ein darin eingeordneter Relationswert tatsächlich auf der Detektion von Partikeln der zugeordneten Partikelklasse beruht, abnehmend.

Gegenüber einem computergestützten Lernprozess, dessen Grundlage rein mathematischer Natur ist, basiert eine derart erstellte Klassifizierungskarte auf gemessenen physikalischen Größen, wodurch die Ergebnisse, d. h. die für bestimmte Partikelklassen ermittelten spezifischen Bereiche oder Cluster nachvollziehbar und reproduzierbar sind.

In Weiterbildung dieser Verfahrensvariante werden die Bereiche der Klassifizierungskarte anhand von für die zu definierende Partikelklasse spezifischen und von dem Lichtempfänger erfassten Charakteristika im elektromagnetischen Spektrum erfasst. Bei den erfassten Charakteristika handelt es sich bspw. um den Partikel-, Frequenz- und Raumwinkelabhängigen differentiellen Streuquerschnitt und/oder die partikelabhängigen Streukoeffizienten der Mie Theorie.

Die Anzahl an Spektralbändern und/oder Spektrallinien die zur Festlegung eines Bereichs mit ausreichend hoher Wahrscheinlichkeit erforderlich ist, ist dann auch ausschlaggebend für die Anzahl der erforderlichen, insbesondere unterschiedlichen charakteristischen Wellenlängen, die zur Identifizierung der detektierten Partikel und zur Einordnung in eine Partikelklasse mit ausreichend hoher Wahrscheinlichkeit erforderlich sind. Um beispielsweise durch einen Brand erzeugten Rauch von beim Braten von Burgern, Rösten von Brot usw. erzeugten Partikeln und Aerosolen unterscheiden zu können, hat sich die Verwendung dreier unterschiedlicher charakteristischer Wellenlängen, wobei eine der Wellenlängen als charakteristische Referenz-Wellenlänge genutzt wird, als besonders vorteilhaft herausgestellt.

Die nachfolgenden Verfahrensvarianten des erfindungsgemäßen Klassifizierungsverfahrens werden daher jeweils am Beispiel zweier unterschiedlicher charakteristischer Wellenlängen und einer davon abweichenden charakteristischen Referenz-Wellenlänge näher beschrieben. Selbstverständlich können die nachfolgenden Verfahrensvarianten jeweils auch im Falle von weiteren, zum Beispiel einer dritten, vierten usw. charakteristischen Wellenlängen entsprechend angewendet werden.

Nach einer optionalen Verfahrensvariante werden die charakteristischen Wellenlängen des von dem Lichtempfänger erfassten Lichts durch mindestens zwei Lichtquellen und eine Referenzlichtquelle des Lichtsenders, insbesondere eines einzigen Lichtsenders definiert, wobei jede der Lichtquellen Licht einer jeweiligen charakteristischen Wellenlänge aussendet.

Nach einer anderen, ebenfalls optionalen Verfahrensvariante werden die charakteristischen Wellenlängen des von dem Lichtempfänger erfassten Lichts durch mindestens zwei Lichtsensoren und einen Referenzlichtsensor des Lichtempfängers, insbesondere eines einzigen Lichtempfängers, definiert, wobei jeder der Lichtsensoren zum Erfassen von Licht einer jeweiligen charakteristischen Wellenlänge konfiguriert ist. Eine derartige Konfiguration kann bspw. durch die Verwendung von für die gewünschte charakteristische Wellenlänge oder charakteristische Referenz-Wellenlänge spezifischen Filtern, insbesondere Farbfiltern erfolgen. Jedem Lichtsensor und dem Referenzlichtsensor ist dann ein jeweiliger Filter zugeordnet.

Gemäß dieser optionalen Verfahrensvarianten kann die Bereitstellung der zur Klassifizierung von im Detektionsbereich detektierten Partikel erforderlichen, unterschiedlichen charakteristischen Wellenlängen sowie der davon abweichenden charakteristischen Referenz-Wellenlänge also wahlweise auf Lichtsenderseite oder Lichtempfängerseite oder sogar auf Lichtsender- und Lichtempfängerseite erfolgen.

In vorteilhafter Weiterbildung dieser optionalen Verfahrensvarianten überlagert das von den mindestens zwei Lichtquellen und der Referenzlichtquelle ausgesendete Licht einen gemeinsamen Lichtpfad entlang der optischen Achse des Lichtsenders definierend einander zumindest teilweise und/oder überlagert das von den mindestens zwei Lichtsensoren und dem Referenzlichtsensor erfasste Licht einen gemeinsamen Einfallsbereich entlang der optischen Achse des Lichtempfängers definierend einander zumindest teilweise.

Durch Überlagerung der Lichtpfade der jeweiligen Lichtquellen zu einem gemeinsamen Lichtpfad kann sichergestellt werden, dass die vom Lichtempfänger erfassten Lichtintensitätssignale jeweils auf denselben, im Detektionsbereich befindlichen Partikeln beruhen. Etwaige Störgrößen innerhalb des gemeinsamen Lichtpfads, wie Verschmutzungen, die eine Veränderung der Lichtintensität zur Folge haben, können so eliminiert werden. Auf diese Weise können grundsätzlich identische Umgebungsbedingungen geschaffen werden. Je größer der Überlagerungsbereich, also der gemeinsame Lichtpfad, auf einen umso höheren Anteil des ausgesendeten Lichts trifft dies zu. Beispielsweise liegt die Überlagerung bei mindestens 50%, vorzugsweise in einem Bereich zwischen 80 bis 100%, insbesondere zwischen 90 bis 100% und besonders bevorzugt zwischen 95 bis 100%. Entsprechendes gilt auch für den gemeinsamen Einfallsbereich, weshalb auch die Überlagerung der Einfallsbereiche mehrerer Lichtsensoren eines Lichtempfängers beispielsweise bei mindestens 50%, vorzugsweise in einem Bereich zwischen 80 bis 100%, insbesondere zwischen 90 bis 100% und besonders bevorzugt zwischen 95 bis 100% liegt.

Gemäß einer weiteren beispielhaften Verfahrensvariante wird das Licht jeweiliger charakteristischer Wellenlänge von dem Lichtempfänger zeitgleich oder zeitlich aufeinanderfolgend erfasst. Als schaltungstechnisch besonders vorteilhaft hat sich hierbei herausgestellt, zumindest das Referenz-Lichtintensitätssignal zu einem abweichenden Zeitpunkt, insbesondere unmittelbar vor oder nach der Ermittlung des ersten und des zweiten Lichtintensitätssignals zu ermitteln.

Eine andere, ebenso beispielhafte Verfahrensvariante sieht vor, dass die charakteristischen Wellenlängen des von dem Lichtempfänger erfassten Lichts im Infrarot- oder Rotbereich, d.h. in einem Wellenlängenbereich zwischen ca. 940 nm - 640 nm, besonders bevorzugt 940nm, im Grünbereich, d. h. in einem Wellenlängenbereich zwischen ca. 570 nm - 490 nm, besonders bevorzugt 530 nm und/oder im Blaubereich, d. h. in einem Wellenlängenbereich zwischen ca. 490 nm - 430 nm, besonders bevorzugt 450 nm liegen.

In Weiterbildung dieser beispielhaften Verfahrensvariante wird das Licht mit der ersten charakteristischen Wellenlänge, insbesondere im Blaubereich zur kontinuierlichen Detektion von Partikeln mittels der Partikeldetektionseinheit verwendet, wobei im Detektionsbereich befindliche Partikel anhand einer Veränderung dessen Lichtintensitätssignals erkannt werden.

Das Licht mit der zweiten charakteristischen Wellenlänge, insbesondere im Infrarot- oder Rotbereich und das Licht mit der charakteristischen Referenz-Wellenlänge, insbesondere im Grünbereich werden zur Klassifizierung der detektierten Partikel verwendet, wobei die von dem Lichtempfänger erfasste Lichtintensität des Lichts mit der charakteristischen Referenz-Wellenlänge als Referenz-Lichtintensitätssignal ermittelt wird, und die vom Lichtempfänger erfasste Lichtintensität des Lichts mit der ersten charakteristischen Wellenlänge und der zweiten charakteristischen Wellenlänge, als erstes sowie zweites Lichtintensitätssignal ermittelt und diese in der Art einer Skalierung zu dem von dem Lichtempfänger ermittelten Referenz-Lichtintensitätssignal in Relation, insbesondere ins Verhältnis gesetzt werden.

Bei einer derart weitergebildeten Verfahrensvariante kann zum Beispiel der Detektionsbereich zur kontinuierlichen Detektion von Partikeln in regelmäßigen (kurzen) Zeitabständen durch eine Lichtquelle mit blauem Licht beaufschlagt werden. Sobald, eine Veränderung des ersten Lichtintensitätssignals das Vorhandensein von Partikeln im Detektionsbereich signalisiert, können dann die beiden weiteren Lichtquellen, mit Licht im Infrarot- oder Rotbereich bzw. mit grünem Licht zugeschaltet werden. Das grüne Licht dient zur Ermittlung des Referenz-Lichtintensitätssignals, wobei dann die Lichtintensitätssignale des blauen und des roten bzw. infraroten Lichts dazu in Relation gesetzt werden. Anhand der so erhaltenen Relationswerte, die in der Art einer Kennzahl fungieren, kann die Einordung in die Klassifizierungskarte und abschließend die Zuordnung zu einer Partikelklasse erfolgen.

Schließlich ist nach einer vorteilhaften Erfindungsausgestaltung das Verfahren als eine Programmierung auf einem Speicherelement eines Steuerungsmoduls der Partikeldetektionseinheit hinterlegt, wobei das Steuerungsmodul signalübertragend mit dem Lichtsender verbunden ist, um diesen zum Aussenden von Licht anzusteuern, und signalübertragend mit dem Lichtempfänger verbunden ist, um die vom Lichtempfänger erfassten Lichtintensitätssignale zu empfangen. Vorzugsweise ist die für die Zuordnung zu einer definierten Partikelklasse erforderliche Klassifizierungskarte anhand physikalischer Größen vorab empirisch ermittelt worden und sind deren Daten auf dem Speicherelement des Steuerungsmoduls hinterlegt.

Die Erfindungsaufgabe wird daher auch durch eine Partikeldetektionseinheit der eingangs näher beschriebenen Art gelöst, die zur Durchführung des Klassifizierungsverfahrens nach einer der zuvor beschriebenen Varianten geeignet ist.

Eine derartige Partikeldetektionseinheit kennzeichnet sich dadurch, dass der Lichtsender mindestens eine erste Lichtquelle, die zum Aussenden von Licht einer ersten charakteristischen Wellenlänge konfiguriert ist, und eine zweite Lichtquelle, die zum Aussenden von Licht einer zweiten charakteristischen Wellenlänge konfiguriert ist, sowie eine Referenz-Lichtquelle aufweist, die zum Aussenden von Licht einer charakteristischen Referenz-Wellenlänge konfiguriert ist, und/oder der Lichtempfänger mindestens einen ersten Lichtsensor, der zum Erfassen von Licht einer ersten charakteristischen Wellenlänge konfiguriert ist, und einen zweiten Lichtsensor, der zum Erfassen von Licht einer zweiten charakteristischen Wellenlänge konfiguriert ist, sowie einen ReferenzLichtsensor aufweist, der zum Erfassen von Licht einer charakteristischen Referenz-Wellenlänge konfiguriert ist.

Die Festlegung der charakteristischen Wellenlängen sowie der charakteristischen Referenz-Wellenlänge kann also entweder auf der Lichtsenderseite, bspw. durch die Wahl verschiedenfarbiger Lichtquellen oder auf der Lichtempfängerseite, bspw. durch die Verwendung von dem Lichtempfänger bzw. dessen Lichtsensoren zugeordneten Filtern, insbesondere Farbfiltern, erfolgen. Denkbar ist aber auch eine Kombination dieser beiden Möglichkeiten, wobei zum Beispiel eine weiße LED auf der Lichtsenderseite verwendet wird, und die erste charakteristische Wellenlänge sowie die zweite charakteristische Wellenlänge und die Referenz-Wellenlänge auf der Lichtempfängerseite, durch drei entsprechende Filter, insbesondere Farbfilter festgelegt werden.

Erfindungsgemäß sind die erste und die zweite Lichtquelle sowie die ReferenzLichtquelle des Lichtsenders derart zueinander ausgerichtet, dass das jeweils ausgesendete Licht einen gemeinsamen Lichtpfad entlang der optischen Achse des Lichtsenders definierend einander zumindest teilweise überlagert, und/oder sind der erste und der zweite Lichtsensor sowie der Referenz-Lichtsensor des Lichtempfängers derart zueinander ausgerichtet, dass das von dem jeweiligen Lichtsensor erfassbare Licht einen gemeinsamen Einfallsbereich entlang der optischen Achse des Lichtempfängers definierend einander zumindest teilweise überlagert.

Vorzugsweise sind alle verwendeten Lichtquellen zu einem einzigen Lichtsender, bspw. einer LED mit mehreren benachbarten und auf einer gemeinsamen Leiterplatte angeordneten LED-Chips und/oder alle Lichtsensoren zu einem einzigen Lichtempfänger, bspw. einer Photodiode mit mehreren benachbarten und auf einer gemeinsamen Leiterplatte angeordneten Photo-Chips, zusammengefasst. Der Lichtsender weist in diesem Fall einen gemeinsamen Lichtpfad bzw. der Lichtempfänger einen gemeinsamen Einfallsbereich auf. Sofern nur eine einzige Lichtquelle verwendet wird, die dann dem Lichtsender entspricht, weist dieser hingegen einen (einfachen) Lichtpfad auf, entsprechend weist auch ein mit nur einem einzigen Lichtsensor ausgebildeter Lichtempfänger einen (einfachen) Einfallsbereich auf.

Erfindungsgemäß ist zur Definition des Detektionsbereichs der Einfallsbereich oder der gemeinsame Einfallsbereich des Lichtempfängers auf den gemeinsamen Lichtpfad des Lichtsenders ausgerichtet oder ist der Lichtpfad oder gemeinsame Lichtpfad des Lichtsenders auf den gemeinsamen Einfallsbereich des Lichtempfängers ausgerichtet.

Durch eine derartige Ausrichtung kann in ein und demselben Detektionsbereich jeweils vorliegendes Licht zumindest einer ersten und einer zweiten charakteristischen Wellenlänge sowie einer charakteristischen Referenz-Wellenlänge an darin befindlichen Partikeln gestreut oder durch darin befindliche Partikel reduziert werden. Das an den Partikeln gestreute Streulicht oder das durch die Partikel reduzierte Durchlicht kann anhand entsprechender Lichtintensitätssignale, die jeweils durch dieselben, im Detektionsbereich befindlichen Partikel beeinflusst sind, erfasst werden. Indem die Lichtquellen und/oder die Lichtsensoren einen gemeinsamen Lichtpfad bzw. Einfallsbereich bilden, wird zudem sichergestellt, dass weitere, auf die Lichtintensitätssignale einwirkende Faktoren oder Störgrößen, wie Verschmutzungen innerhalb des Lichtverlaufs identisch sind. Auf diese Weise lässt sich das ermittelte Referenz-Lichtintensitätssignal als gleichartige, festgelegte Bezugsgröße zur Skalierung zumindest des ersten und des zweiten Lichtintensitätssignals sowie etwaigen weiteren Lichtintensitätssignalen in dem zuvor beschriebenen Klassifizierungsverfahren nutzen.

Nach einer vorteilhaften Ausgestaltung der erfindungsgemäßen Partikeldetektionseinheit sind die Lichtquellen und/oder die Lichtsensoren durch jeweils zugeordnete Filter, insbesondere Farbfilter zum Aussenden bzw. zum Erfassen von Licht einer jeweiligen charakteristischen Wellenlänge konfiguriert.

Die Verwendung von Filtern ist also nicht nur auf der Lichtempfängerseite, sondern auch auf der Lichtsenderseite denkbar. Dies ermöglicht insbesondere die Verwendung von nur einer einzigen oder mehreren gleichfarbigen Lichtquellen, deren charakteristische Wellenlängen dann durch jeweils zugeordnete Filter festgelegt werden.

In einer bevorzugten Erfindungsausgestaltung ist der Lichtsender als Leuchtdiode und der Lichtempfänger als Photodiode ausgebildet, wobei der Lichtsender mindestens einen ersten LED-Chip, einen zweiten LED-Chip und einen Referenz-LED-Chip und/oder der Lichtempfänger mindestens einen ersten Photo-Chip, einen zweiten Photo-Chip und einen Referenz-Photo-Chip umfasst.

Die LED-Chips entsprechen dann unterschiedlichen Lichtquellen des Lichtsenders und die Photo-Chips unterschiedlichen Lichtsensoren des Lichtempfängers.

In Weiterbildung dieser Erfindungsausgestaltung sind der erste und der zweite LED-Chip sowie der Referenz-LED-Chip unmittelbar zueinander benachbart auf einer gemeinsamen Grundplatte, insbesondere Leiterplatte angeordnet, und ist deren jeweils ausgesendetes Licht mittels eines optischen Mittels, insbesondere einer Linse entlang einer gemeinsamen optischen Achse ausgerichtet und/oder gebündelt.

Optional oder alternativ können auch der erste und der zweite Photo-Chip sowie der Referenz-Photo-Chip unmittelbar zueinander benachbart auf einer gemeinsamen Grundplatte, insbesondere Leiterplatte angeordnet sein und deren jeweiliger Einfallsbereich mittels eines optischen Mittels, insbesondere einer Linse entlang einer gemeinsamen optischen Achse ausgerichtet und/oder gebündelt sein.

Die gemeinsame optische Achse entspricht dann der optischen Achse des Lichtsenders bzw. der optischen Achse des Lichtempfängers.

Gemäß einer weiteren, ebenfalls bevorzugten Ausgestaltung der erfindungsgemäßen Partikeldetektionseinheit, schließen die, insbesondere alle Lichtquellen des Lichtsenders mit dem Lichtempfänger jeweils denselben Streulichtwinkel ein und sind zur Definition eines einzigen, identischen Detektionsbereichs jeweils auf den Einfallsbereich des Lichtempfängers ausgerichtet.

Alternativ können auch die Lichtsensoren, insbesondere alle Lichtsensoren des Lichtempfängers mit dem Lichtsender jeweils denselben Streulichtwinkel einschließen und zur Definition eines einzigen, identischen Detektionsbereichs jeweils auf den Lichtpfad des Lichtsenders ausgerichtet sein.

Vorzugsweise weist das Steuerungsmodul außerdem ein Speicherelement auf, welches eine Programmierung sowie eine Klassifizierungskarte zur Durchführung eines Verfahrens nach einer der zuvor beschriebenen Varianten umfasst.

Schließlich kann nach einer beispielhaften Ausführungsform die Partikeldetektionseinheit Bestandteil eines Ansaugpartikelerkennungssystems sein, mit mindestens einer Rohr- und/oder Schlauchleitung, die über eine oder mehrere Ansaugöffnungen zur jeweiligen Entnahme einer Fluidprobe in einen oder mehrere Überwachungsbereiche mündet. Der Lichtsender und der Lichtempfänger sind dann einen Detektionsbereich, insbesondere einen einzigen Detektionsbereich innerhalb eines von den Fluidproben durchströmbaren Strömungspfads definierend zueinander ausgerichtet.

Weitere Einzelheiten, Merkmale, Merkmals(unter)kombinationen, Vorteile und Wirkungen auf Basis der Erfindung ergeben sich aus der nachfolgenden Beschreibung bevorzugter Ausführungsbeispiele der Erfindung und den Zeichnungen. Diese zeigen in
- Fig. 1: eine schematische Darstellung einer Ausführungsform einer erfindungsgemäßen Partikeldetektionseinheit mit einem Lichtsender und einem Lichtempfänger in einer ersten, beispielhaften Konfiguration,
- Fig. 2: eine schematische Detailansicht der ersten beispielhaften Konfiguration des Lichtsenders und des Lichtempfängers der Partikeldetektionseinheit aus Figur 1,
- Fig. 3: eine schematische Darstellung beispielhafter Anordnungen von Lichtquellen auf einer Grundplatte des Lichtsenders gemäß der ersten beispielhaften Konfiguration aus den Figuren 1 und 2,
- Fig. 4: eine schematische Detailansicht einer zweiten beispielhaften Konfiguration eines Lichtsenders und eines Lichtempfängers einer Ausführungsform der erfindungsgemäßen Partikeldetektionseinheit,
- Fig. 5: eine schematische Darstellung einer beispielhaften Anordnung einer Lichtquelle auf einer Grundplatte des Lichtsenders sowie mehrerer Lichtsensoren auf einer Grundplatte des Lichtempfängers gemäß der Konfiguration aus Figur 4,
- Fig. 6: eine schematische Darstellung eines Ansaugpartikelerkennungssystems, mit einer integrierten, Partikeldetektionseinheit gemäß der Figur 1,
- Fig. 7: ein Ablaufschema eines beispielhaften Ablaufs des erfindungsgemäßen Klassifizierungsverfahrens,
- Fig. 8: eine schematische Darstellung einer beispielhaften Schaltung einer ersten und einer zweiten Lichtquelle sowie einer Referenz-Lichtquelle,
- Fig. 9: eine beispielhafte Darstellung einer Klassifizierungskarte mit insgesamt drei, einer jeweiligen Partikelklasse zugeordneten Bereichen,
- Fig. 10: eine beispielhafte Darstellung eines jeweiligen Wahrscheinlichkeitsverlaufs innerhalb der Bereiche der Klassifizierungskarte aus Figur 10 und in
- Fig. 11: eine beispielhafte Auftragung über die Zeit, der von dem Lichtempfänger ermittelten Lichtintensitätssignale für drei charakteristische Wellenlängen.

Die Figuren sind lediglich beispielhafter Natur und dienen nur dem Verständnis der Erfindung. Die gleichen Elemente sind mit denselben Bezugszeichen versehen.

Die nachfolgende, detaillierte Beschreibung beispielhafter Ausführungsformen der erfindungsgemäßen Partikeldetektionseinheit sowie beispielhafter Varianten des erfindungsgemäßen Klassifizierungsverfahrens erfolgt jeweils am Beispiel einer ersten und einer zweiten, zueinander unterschiedlichen charakteristischen Wellenlänge sowie einer davon abweichenden charakteristischen Referenz-Wellenlänge. Selbstverständlich sind die nachfolgenden Ausführungsformen und Verfahrensvarianten auch auf weitere charakteristische Wellenlängen, zum Beispiel eine dritte charakteristische Wellenlänge, eine vierte charakteristische Wellenlänge usw. entsprechend anwendbar.

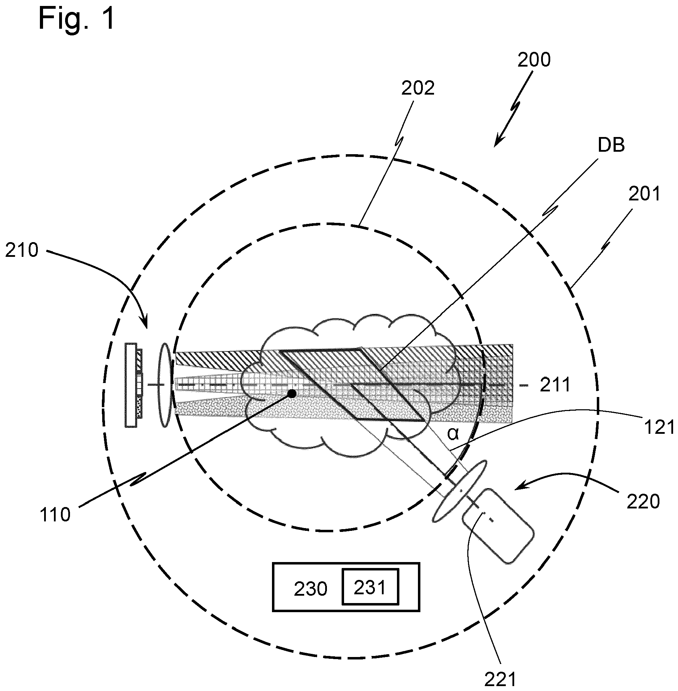

Die Figur 1 zeigt eine schematische Darstellung einer beispielhaften Ausführungsform einer erfindungsgemäßen Partikeldetektionseinheit 200. Die Partikeldetektionseinheit 200 umfasst ein Gehäuse 201 innerhalb dessen ein Lichtsender 210, ein Lichtempfänger 220 und ein Steuerungsmodul 230 angeordnet sind. Der Lichtsender 210 und der Lichtempfänger 220 sind hier in einer ersten, beispielhaften Konfiguration gezeigt, wobei der Lichtsender 210 zum Aussenden von Licht entlang eines gemeinsamen Lichtpfads 110 konfiguriert und ins Innere der Detektionskammer 202 der Partikeldetektionseinheit 200 gerichtet ist. Um zumindest einen Teil des ausgesendeten Lichts, im hier gezeigten Beispiel einen Streulichtanteil, zu erfassen ist der Einfallsbereich 121 des Lichtempfängers 220 ebenfalls ins Innere der Detektionskammer 202 gerichtet, sodass sich der gemeinsame Lichtpfad 110 des Lichtsenders 210 und der Einfallsbereich 121 des Lichtempfängers 220 im Innern der Detektionskammer 202 überlagern. Dieser Überschneidungsbereich definiert den Detektionsbereich DB, innerhalb dessen Partikel, bspw. Rauchpartikel detektierbar sind. Die optische Achse 211 des Lichtsenders 210 und die optische Achse 221 des Lichtempfängers 220 schneiden einander im Detektionsbereich DB und schließen dort den Streulichtwinkel α miteinander ein. Vom Lichtsender 210 ausgesendetes Licht, welches an im Detektionsbereich DB befindlichen Partikeln im Streulichtwinkel α gestreut wird, wird vom Lichtempfänger 220 erfasst und kann dadurch zur Detektion der Partikel genutzt werden. Die Partikeldetektionseinheit 200 ist in der Figur 1 anhand einer Streulichtanordnung dargestellt. Möglich ist natürlich auch eine Ausgestaltung als Durchlichtanordnung, wobei dann der Lichtsender 210 und der Lichtempfänger 220 einander gegenüberliegend angeordnet wären, d. h. deren optische Achsen 211, 221 einen Winkel von 0° miteinander einschließen würden. Das Steuerungsmodul 230 ist signalübertragend sowohl mit dem Lichtsender 210 als auch mit dem Lichtempfänger 220 verbunden und zur Ansteuerung des Lichtsenders 210 sowie zur Erfassung und Auswertung der von dem Lichtempfänger 220 übermittelten Signale konfiguriert. Hierzu kann eine entsprechende Programmierung auf einem Speicherelement 231 des Steuerungsmoduls 230 hinterlegt sein.

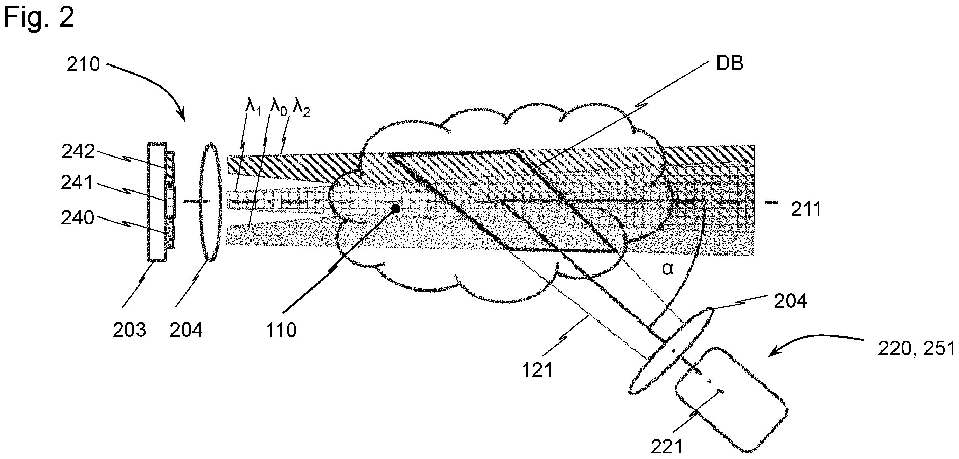

In der Figur 2 ist eine schematische Detailansicht der Streulichtanordnung der der Partikeldetektionseinheit 200 aus Figur 1 dargestellt. In der hier gezeigten, ersten beispielhaften Konfiguration ist der Lichtsender 210 als Leuchtdiode mit insgesamt drei LED-Chips, die als eine zum Aussenden von Licht einer ersten charakteristischen Wellenlänge λ₁ konfigurierte erste Lichtquelle 241, eine zum Aussenden von Licht einer zweiten charakteristischen Wellenlänge λ₂ konfigurierte zweite Lichtquelle 242, und als eine zum Aussenden von Licht einer charakteristischen Referenz-Wellenlänge λ₀ konfigurierte Referenz-Lichtquelle 240 fungieren. Die LED-Chips, d. h. die Lichtquellen 240, 241, 242 sind auf einer gemeinsamen Grundplatte 203 unmittelbar zueinander benachbart angeordnet, sodass deren jeweilige Lichtpfade einander überlagern und einen gemeinsamen Lichtpfad 110 entlang der optischen Achse 211 des Lichtsenders 210 definieren. Durch ein optisches Mittel 204, hier eine Linse wird der gemeinsame Lichtpfad 110 ausgerichtet und entlang der optischen Achse 211 fokussiert. Durch Verwendung des optischen Mittels 204 lässt sich u. a. der Überlagerungsbereich, innerhalb dessen sich das von den einzelnen Lichtquellen 240, 241, 242 jeweils ausgesendete Licht überlagert, vergrößern. Die Lichtquellen 240, 241, 242 sind außerdem zu einem einzigen Lichtsender 210 zusammengefasst. In der konkret gezeigten Ausführungsform bedeutet dies, dass drei LED-Chips jeweils als Bestandteil derselben Leuchtdiode ausgeführt sind, d. h. jeweils unmittelbar zueinander benachbart oder in unmittelbarer Nähe zueinander mit derselben Grundplatte 203, insbesondere einer Leiterplatte verbunden sind und durch eine gemeinsame Linse 204 entlang der optischen Achse 211 der Leuchtdiode fokussiert werden.

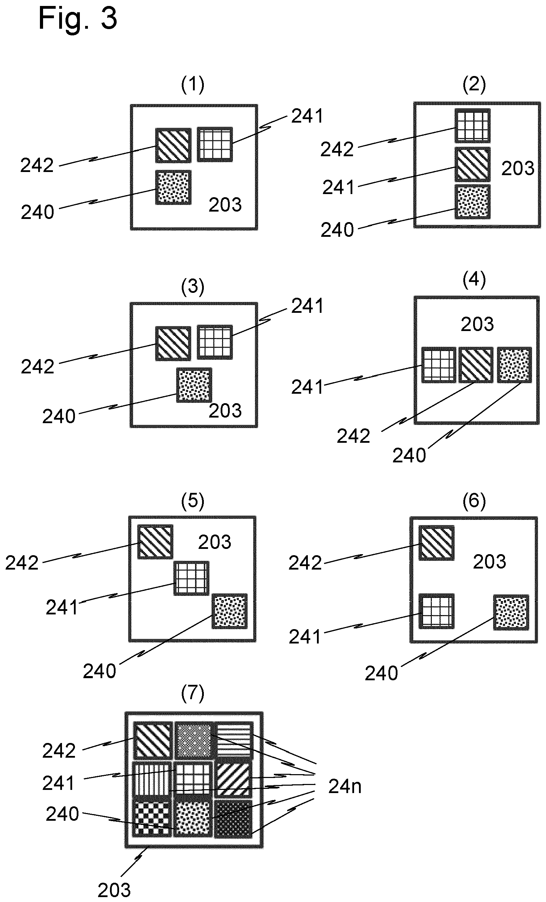

Der Figur 3 sind beispielhafte Anordnungen (1) bis (6) der drei Lichtquellen 240, 241, 242 auf der Grundplatte 203 zu entnehmen. Zweckmäßigerweise sind alle Lichtquellen 240, 241, 242 auf derselben Seite der Grundplatte 203 angeordnet. Die Lichtquellen 240, 241, 242 sind dabei derart ausgerichtet, dass deren jeweiliger Lichtpfad orthogonal zur Oberfläche der Grundplatte 203 verläuft und die jeweiligen optischen Achsen parallel zueinander ausgerichtet sind. Ferner ist eine weitere beispielhafte Anordnung (7) mit insgesamt neun als LED-Chips ausgebildeten Lichtquellen 240, 241, 242, 24n auf der Grundplatte 203 gezeigt. Zusätzlich zu der Referenz-Lichtquelle 240, sowie der ersten und der zweiten Lichtquelle 241, 242 sind hier beispielhaft sechs weitere Lichtquellen 24n vorgesehen, die bedarfsweise redundant genutzt werden können, d. h. zum Aussenden von Licht bspw. ebenfalls der ersten oder der zweiten charakteristischen Wellenlänge λ₁, λ₂ konfiguriert sind, oder aber zum Aussenden von Licht jeweils weiterer, unterschiedlicher charakteristischer Wellenlängen λₙ konfiguriert sind.

Durch Zusammenfassen aller Lichtquellen 240, 241, 242, 24n zu einem einzigen Lichtsender 210 kann mit dem Lichtempfänger 220 (s. wieder Figur 2) Licht von jeder der Lichtquellen 240, 241, 242, 24n, d. h. mit jeweils unterschiedlicher charakteristischer Wellenlänge, nämlich der ersten charakteristischen Wellenlänge λ₁, der zweiten charakteristischen Wellenlänge λ₂, der charakteristischen Referenz-Wellenlänge λ₀ und etwaigen weiteren charakteristischen Wellenlänge λₙ erfasst werden, welches jedoch an in demselben Detektionsbereich DB vorliegenden Partikeln und in demselben, jeweils identischen Streulichtwinkel α gestreut wurde.

Gemäß der Figur 2 ist der Lichtempfänger 220 hierzu mit dessen Einfallsbereich 121 auf den gemeinsamen Lichtpfad 110 ausgerichtet. Im gezeigten Beispiel ist der Lichtempfänger 220 als Photodiode mit einem als einzelner Lichtsensor 251 fungierenden Photo-Chip ausgebildet und mit einer hier nicht gezeigten Grundplatte 203, insbesondere einer Leiterplatte verbunden. Unmittelbar vor dem Lichtsensor 251 ist wiederum ein optisches Mittel 204, zum Beispiel eine Linse angeordnet. Durch das optische Mittel 204 wird der Einfallsbereich 121 des Lichtempfängers 220 entlang dessen optischer Achse 221 auf den gemeinsamen Lichtpfad 110 des Lichtsenders 210 ausgerichtet und fokussiert, sodass an in dem derart definierten Detektionsbereich DB befindlichen Partikeln und im Streulichtwinkel α gestreutes Streulicht aller drei Lichtquellen 240, 241, 242 gleichermaßen erfasst werden kann.

Die Bereitstellung von Licht unterschiedlicher charakteristischer Wellenlängen λ₀, λ₁, λ₂ ist gemäß der in den Figuren 1 und 2 gezeigten ersten beispielhaften Konfiguration durch insgesamt drei Lichtquellen 240, 241, 242 des Lichtsenders 210, also auf der Lichtsenderseite realisiert.

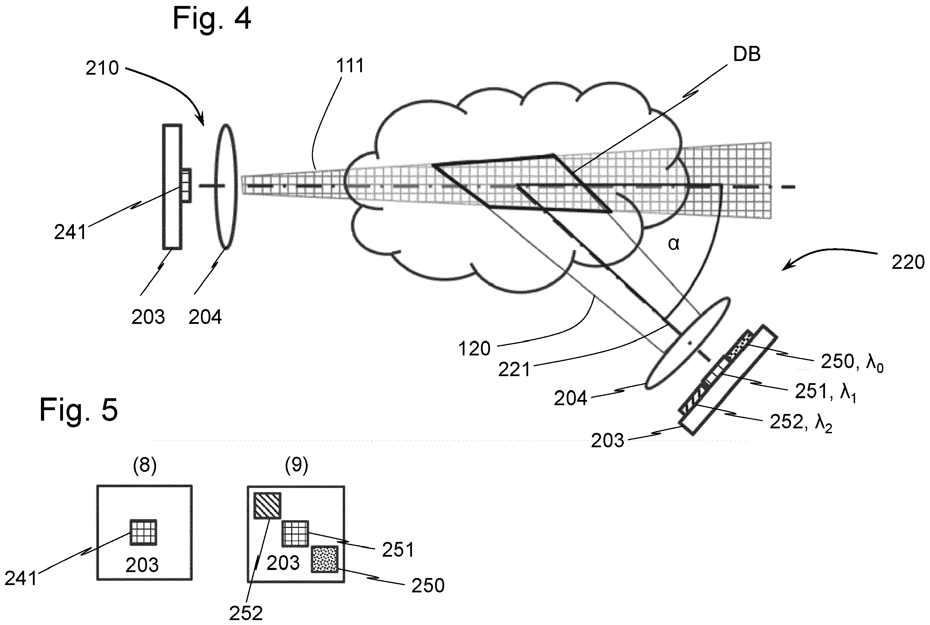

Davon abweichend ist in der Figur 4 eine beispielhafte Ausführungsform der erfindungsgemäßen Partikeldetektionseinheit 200 dargestellt, bei welcher die Bereitstellung Licht unterschiedlicher charakteristischer Wellenlängen λ₀, λ₁, λ₂ durch eine zweite beispielhafte Konfiguration auf der Lichtempfängerseite erfolgt. Die gezeigte Anordnung von Lichtsender 210 und Lichtempfänger 220 entspricht im Wesentlichen der Anordnung aus den Figuren 1 und 2 und ist folglich wiederum anhand einer Streulichtanordnung näher beschrieben. Selbstverständlich könnte eine entsprechende Umsetzung auch für eine Durchlichtanordnung realisiert werden. Abweichend von der ersten beispielhaften Konfiguration wird die Bereitstellung von Licht unterschiedlicher charakteristischer Wellenlängen λ₁, λ₂ sowie der charakteristischen Referenz-Wellenlänge λ₀ hier allerdings durch insgesamt drei als Photo-Chips einer Photodiode ausgebildete Lichtsensoren 250, 251, 252 auf der Lichtempfängerseite realisiert. Die Lichtsensoren 250, 251, 252 sind mittels jeweiliger, zugeordneter Filter, insbesondere Farbfilter (nicht dargestellt) zum Erfassen von Licht der ersten und der zweiten charakteristischen Wellenlänge λ₁, λ₂ sowie der charakteristischen Referenz-Wellenlänge λ₀ konfiguriert. Der erste und der zweite Lichtsensor 251, 252 und der Referenz-Lichtsensor 250 sind dabei so zueinander benachbart ausgerichtet, dass das von dem jeweiligen Lichtsensor 251, 252, 250 erfassbare Licht einen gemeinsamen Einfallsbereich 120 entlang der optischen Achse 221 des Lichtempfängers 220 definierend einander überlagert. Der gemeinsame Einfallsbereich 120 ist zur Definition des Detektionsbereichs DB auf den (hier einfachen) Lichtpfad 111 des Lichtsenders 210, welcher in der hier gezeigten Konfiguration durch eine einzige, insbesondere als LED-Chip ausgebildete Lichtquelle 241 definiert wird, ausgerichtet.

Eine beispielhafte Anordnung (8) einer einzigen Lichtquelle 241, die auf einer Grundplatte 203 des Lichtsenders 210 angeordnet ist, sowie eine beispielhafte Anordnung (9) dreier Lichtsensoren 250, 251, 252, die auf einer gemeinsamen Grundplatte 203 des Lichtempfängers 220 angeordnet sind, können der Figur 5 entnommen werden. Darüber hinaus sind selbstverständlich weitere Anordnungen der Lichtsensoren 250, 251, 252 oder auch die Verwendung zusätzlicher Lichtsensoren entsprechend den Anordnungen (1) bis (7) der Figur 3 denkbar.

Auch durch Überlagerung aller Lichtsensoren 250, 251, 252 zu einem gemeinsamen Einfallsbereichs 120 kann nämlich mit dem Lichtempfänger 220 Licht mit jeweils unterschiedlicher charakteristischer Wellenlänge, der ersten charakteristischen Wellenlänge λ₁, der zweiten charakteristischen Wellenlänge λ₂, der charakteristischen Referenz-Wellenlänge λ₀ und etwaigen weiteren charakteristischen Wellenlänge λₙ erfasst werden, welches jedoch an in demselben Detektionsbereich DB vorliegenden Partikeln und in demselben, jeweils identischen Streulichtwinkel α gestreut worden ist.

Anhand des erfassten Streulichts gibt der Lichtempfänger 220 ein für die jeweilige charakteristische Wellenlänge λ₀, λ₁, λ₂ spezifisch ermitteltes Lichtintensitätssignal I₀, I₁, I₂ aus, welches dem signalübertragend verbundenen Steuerungsmodul 230 übermittelt werden kann. Die Lichtintensitätssignale I₀, I₁, I₂ basieren also auf jeweils (nahezu) identischen Umgebungsbedingungen, wie etwaige Störgrößen, z. B. Verschmutzungen innerhalb des Lichtverlaufs, Anzahl und Menge der im Detektionsbereich DB befindlichen Partikel und den Streulichtwinkel α, in welchem das erfasste Licht an den Partikeln gestreut wurde. Die den Lichtintensitätssignalen I₀, I₁, I₂ zugrunde liegende, jeweils voneinander abweichende physikalische Größe ist die charakteristische Wellenlänge bzw. Referenz-Wellenlänge λ₁, λ₂, λ₀. Die durch die beschriebenen Konfigurationen von Lichtsender 210 und Lichtempfänger 220 ermittelbaren Lichtintensitätssignale I₀, I₁, I₂ eignen sich daher besonders zur Klassifizierung von im Detektionsbereich DB vorhandenen Partikeln oder Aerosolen. Ein solches Klassifizierungsverfahren kann bspw. zur Branderkennung in Deckenrauchmeldern, aber auch in Ansaugpartikelerkennungssystemen verwendet werden.

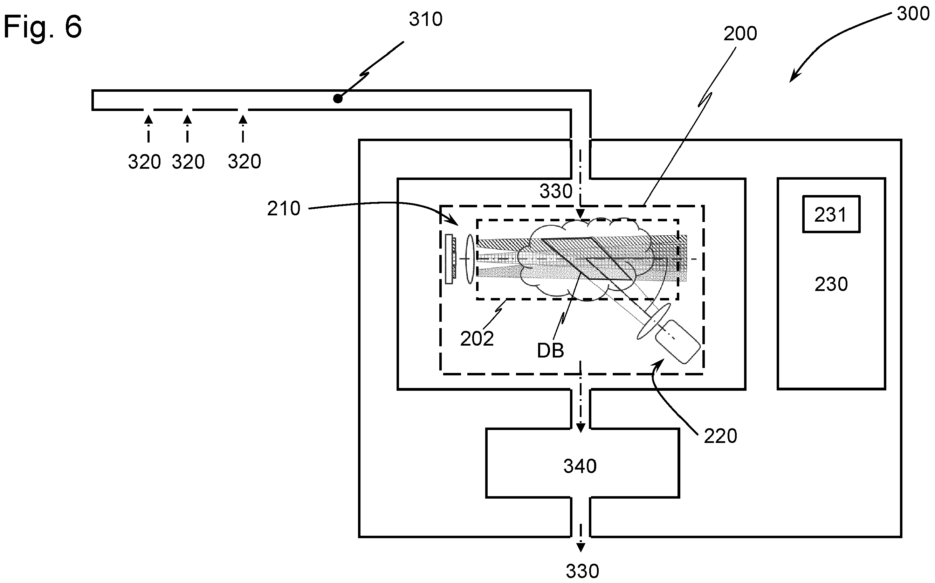

Die Figur 6 zeigt eine schematische Darstellung der ersten beispielhaften Ausführungsform der Partikeldetektionseinheit 200 aus Figur 1, die Bestandteil eines Ansaugpartikelerkennungssystems 300 ist. Das Ansaugpartikelerkennungssystem 300 umfasst mindestens eine Rohr- und/oder Schlauchleitung 310, die über eine oder mehrere Ansaugöffnungen 320 zur jeweiligen Entnahme einer Fluidprobe in einen oder mehrere Überwachungsbereiche mündet. Durch ein Strömungsmittel 340, insbesondere einen Lüfter, kann innerhalb der Rohr- und/oder Schlauchleitung 310 eine Fluidströmung in Richtung der Partikeldetektionseinheit 200 erzeugt werden, die entlang eines Strömungspfads 330 die Detektionskammer 202 durchströmt. Die Partikeldetektionseinheit 200 entspricht in ihrem Aufbau der in der Figur 1 gezeigten, ersten beispielhaften Konfiguration und umfasst einen Lichtsender 210 sowie einen Lichtempfänger 220. Der Lichtsender 210 und der Lichtempfänger 220 sind dabei so zueinander ausgerichtet, dass der Detektionsbereich DB innerhalb des von den Fluidproben durchströmbaren Strömungspfads 330 definiert ist. Das Steuerungsmodul 230 kann zweckmäßigerweise auch zur Steuerung von für das Ansaugpartikelerkennungssystem 300 relevanten Bauteilen, bspw. des Strömungsmittels 340 eingesetzt werden, ist zu diesem Zweck signalübertragend mit entsprechenden Bauteilen verbunden und umfasst die dazu erforderliche Programmierung auf einem Speicherelement 231.

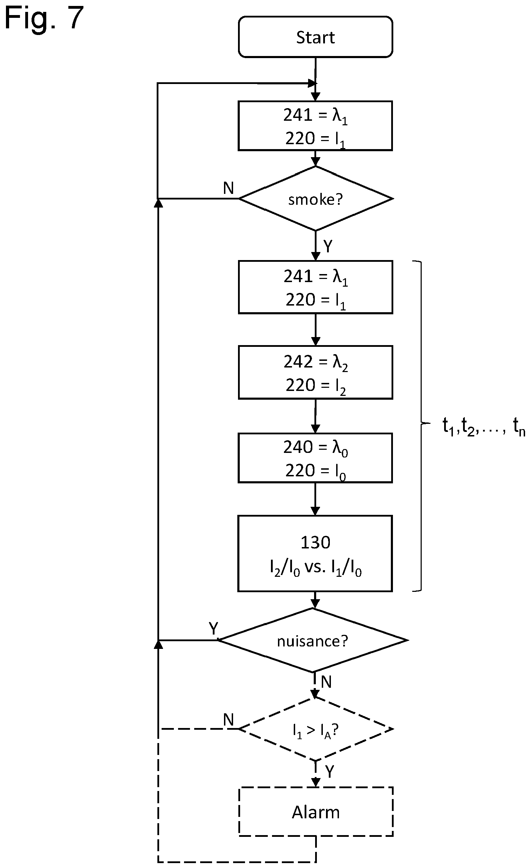

Ein Ablaufschema einer beispielhaften Variante eines erfindungsgemäßen Klassifizierungsverfahrens, welches beispielhaft zur Branderkennung mittels eines Deckenrauchmelders oder Ansaugpartikelerkennungssystems 300 verwendet wird, kann der Figur 7 entnommen werden. Das Klassifizierungsverfahren wird nachfolgend, auf einer Partikeldetektionseinheit 200 mit einer ersten beispielhaften Konfiguration gemäß den Figuren 1 und 2 basierend, näher erläutert. Zur Klassifizierung von innerhalb des Detektionsbereichs DB detektierten Partikeln werden die vom Lichtempfänger 220 ermittelten und an das Steuerungsmodul 230 übertragenen Lichtintensitätssignale I₀, I₁, I₂ genutzt. Der Lichtsender 210 verfügt hierzu über eine erste Lichtquelle 241 mit einer ersten charakteristischen Wellenlänge λ₁, eine zweite Lichtquelle 242 mit einer zweiten charakteristischen Wellenlänge λ₂ sowie eine Referenz-Lichtquelle 240 mit einer charakteristischen Referenz-Wellenlänge λ₀. Vorzugsweise ist der Lichtsender 210 als Leuchtdiode mit drei LED-Chips ausgeführt und der Lichtempfänger 220 als Photodiode mit einem einzelnen Photo-Chip. Vorteilhaft kann die erste charakteristische Wellenlänge λ₁ im Blaubereich, die zweite charakteristische Wellenlänge λ₂ Rot- oder Infrarotbereich und die charakteristische Referenz-Wellenlänge λ₀ im Grünbereich liegen.

Im Betrieb der Partikeldetektionseinheit 200 wird zunächst die erste Lichtquelle 241 zur kontinuierlichen Detektion von Partikeln im Partikeldetektionsmodus betrieben, wobei das Steuerungsmodul 230 die erste Lichtquelle 241 zum Aussenden von Licht der ersten charakteristischen Wellenlänge λ₁ ansteuert. Zumindest ein Anteil des ausgesendeten Lichts, im Beispiel der hier beschriebenen Streulichtanordnung zunächst ein vergleichsweise kleiner Hintergrundstreulichtanteil, der durch im Innern der Detektionskammer 202 gestreutes und/oder reflektiertes Licht erzeugt wird, wird von dem Lichtempfänger 220 erfasst und ein auf der ersten charakteristischen Wellenlänge λ₁ basierendes, erstes Lichtintensitätssignal I₁ ermittelt. Das erste Lichtintensitätssignal I₁ wird auf einer Speichereinheit des Steuerungsmoduls 230 hinterlegt und durch dieses ausgewertet. Solange keine Partikel, bspw. in Form von Rauch im Detektionsbereich DB erkannt werden (smoke = N), wiederholen sich die beschriebenen Schritte. Die Anwesenheit von Partikeln im Detektionsbereich DB wird anhand einer Änderung, im Beispiel einer Streulichtanordnung anhand eines Anstiegs des ersten Lichtintensitätssignals I₁ erkannt, da das an den Partikeln gestreute Streulicht nun zusätzlich vom Lichtempfänger 220 erfasst wird.

Sofern Partikel, insbesondere Rauch im Detektionsbereich DB detektiert werden (smoke = Y), werden zur Klassifizierung der detektierten Partikel in einem Klassifizierungsmodus nacheinander die erste Lichtquelle 241 zum Aussenden von Licht der ersten charakteristischen Wellenlänge λ₁, die zweite Lichtquelle 242 zum Aussenden von Licht der zweiten charakteristischen Wellenlänge λ₂ und die Referenz-Lichtquelle 240 zum Aussenden von Licht der charakteristischen Referenz-Wellenlänge λ₀ angesteuert und die auf den jeweiligen charakteristischen Wellenlängen λ₁, λ₂, λ₀ basierenden sowie für einen ersten Zeitpunkt t₁ ermittelten Lichtintensitätssignale I₁, I₂, I₀ auf der Speichereinheit 231 hinterlegt. Vorzugsweise werden die Lichtintensitätssignale I₁, I₂, I₀ zur Verifizierung der erhaltenen Ergebnisse zu mehreren, aufeinanderfolgenden Zeitpunkten t₁, t₂, ..., tₙ redundant ermittelt.

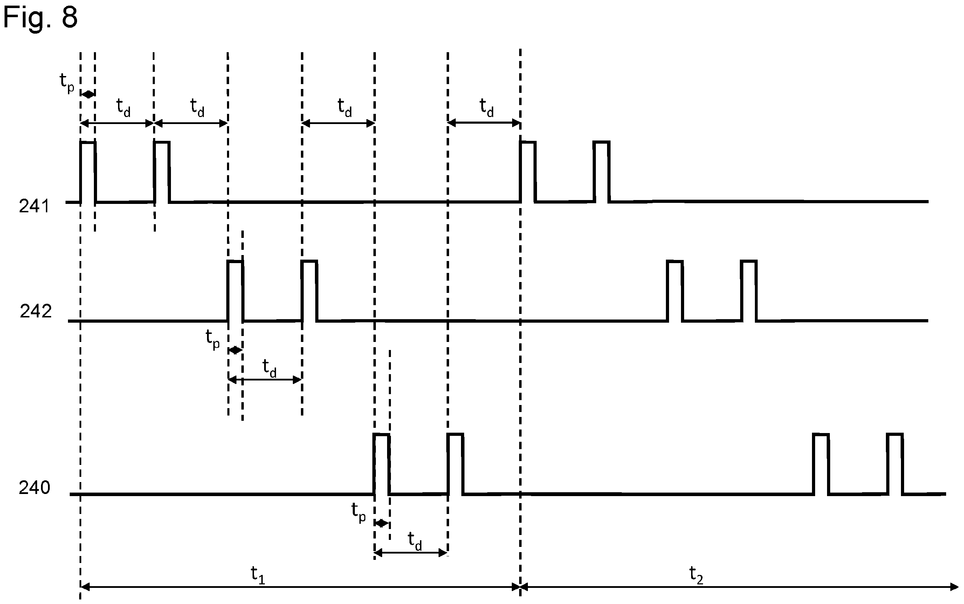

Dies ist bspw. in der Figur 8 für zwei aufeinanderfolgende Zeitpunkte t1 und t2 veranschaulicht. In der Figur 8 ist eine schematische Darstellung einer beispielhaften Ansteuerung der ersten und der zweiten Lichtquelle 241, 242 sowie der Referenz-Lichtquelle 240 zur Klassifizierung detektierter Partikel dargestellt. Die Lichtquellen 241, 242, 240 können als LED-Chips ausgestaltet sein, die zum Aussenden von Licht gepulst, mit einer jeweiligen Pulsdauer tₚ und einem dazwischen liegenden Zeitabstand t_{d} betrieben werden. Eine typische Pulsdauer tₚ beträgt bspw. 4ms, der Zeitabstand t_{d} zwischen den einzelnen Pulsen liegt beispielsweise bei 200ms. Für die Ermittlung der Lichtintensitätssignale I₁, I₂, I₀ zu einem Zeitpunkt t₁ werden beispielsweise die Lichtquellen 241, 242, 240 nacheinander zum Aussenden einer jeweiligen Pulsfolge, bestehend aus zwei, im Zeitabstand t_{d} aufeinanderfolgenden Lichtpulsen der Pulsdauer tₚ angesteuert. Zwischen den jeweiligen Pulsfolgen der Lichtquellen 241, 242, 240 liegt ebenfalls der Zeitabstand t_{d}. Anhand der beiden Lichtpulse (entweder durch Aufaddieren oder durch Bilden eines Mittelwerts) kann das jeweilige Lichtintensitätssignal I₁, I₂, I₀ zum Zeitpunkt t₁ ermittelt und auf der Speichereinheit 231 hinterlegt werden. Die dargestellte Ansteuerung der Lichtquellen 241, 242, 240 und Ermittlung der jeweiligen Lichtintensitätssignale I₁, I₂, I₀ kann nacheinander für beliebige weitere Zeitpunkte t₃, t₄, ..., tₙ erfolgen.

Wieder anhand des beispielhaften Ablaufschemas der Figur 7 gezeigt, werden aus den ermittelten und auf der Speichereinheit 231 des Steuerungsmoduls 230 hinterlegten Lichtintensitätssignalen I₁, I₂, I₀ jeweilige Relationswerte I₁/I₀, I₂/I₀ gebildet, indem das erste und das zweite Lichtintensitätssignal I₁, I₂, jeweils zu dem Referenz-Lichtintensitätssignal I₀ in Relation, insbesondere ins Verhältnis gesetzt werden. Die Relationswerte I₁/I₀, I₂/I₀ werden in eine vorab erstellte und ebenfalls auf der Speichereinheit 231 hinterlegte Klassifizierungskarte 130 eingeordnet. Anhand der Einordnung innerhalb der Klassifizierungskarte 130 erfolgt die Zuordnung zu einer definierten Partikelklasse S₁, S₂, S₃.

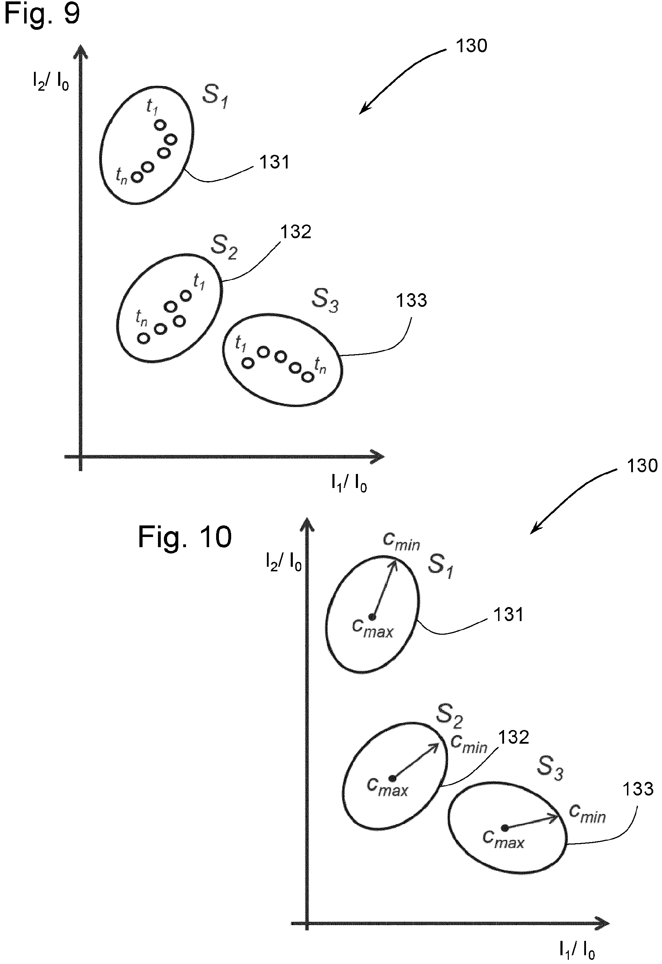

In den Figuren 9 und 10 ist jeweils eine beispielhafte Klassifizierungskarte 130 dargestellt. Die Klassifizierungskarte 130 ist als zweidimensionales Koordinatensystem erstellt, wobei jeder der Achsen ein Relationswert I₁/I₀, I₂/I₀ zugeordnet ist. In der Klassifizierungskarte 130 sind insgesamt drei Bereiche 131, 132, 133 enthalten, jeder der Bereiche 131, 132, 133 entspricht einer zugeordneten Partikelklasse S₁, S₂, S₃ ist. In der Figur 9 sind innerhalb der jeweiligen Bereiche 131, 132 ,133 beispielhafte Relationswerte für jeweils aufeinanderfolgende Zeitpunkte t₁, t₂, ..., tₙ (s. auch Figur 8) dargestellt, die anhand ihrer Koordinaten I₁/I₀, I₂/I₀ in die Klassifizierungskarte 130 eingetragen und anhand der Positionierung innerhalb eines der Bereiche 131, 132, 133 der entsprechenden Partikelklasse S₁, S₂, S₃ zugeordnet werden können. In der Figur 10 ist ein Wahrscheinlichkeitsverlauf cₘₐₓ, cₘᵢₙ innerhalb der jeweiligen Bereiche 131, 132, 133, dargestellt. So liegt die Wahrscheinlichkeit, dass ein darin eingeordneter Relationswert tatsächlich auf der Detektion von Partikeln der zugeordneten Partikelklasse S₁, S₂, S₃ beruht, im Zentrum bei einem Maximalwert cₘₐₓ, (bspw. 99,9 %) und verläuft in Richtung der Begrenzung des Bereichs 131, 132, 133 abnehmend. An der Begrenzung des Bereichs 131, 132, 133 entspricht die Wahrscheinlichkeit cₘᵢₙ (bspw. 95,0 %) dem mindestens erforderlichen Wert um mit ausreichend Sicherheit eine Zuordnung von Partikeln zu einer Partikelklasse S₁, S₂, S₃ treffen zu können.

Für den Anwendungsfall der Branderkennung kann zum Beispiel der erste Bereich 131 einer ersten Partikelklasse S₁, wie dem bei einem Polyurethan-Schwelbrand auftretenden Rauch oder Aerosolen, der zweite Bereich 132 einer zweiten Partikelklasse S₂, wie dem bei einem Holzschwelbrand auftretenden Rauch oder Aerosolen und der dritte Bereich 133 einer dritten Partikelklasse S₃, wie dem bei beim Braten von Hamburgern, Rösten von Brot usw. auftretenden Rauch oder Aerosolen entsprechen. In der Branderkennung wird diese dritte Partikelklasse S₃ als Störgröße (nuisance) bewertet, d. h. Partikel, die zwar detektiert werden, aber keinen Brandalarm auslösen sollen.

Zurück zur Figur 7 sind dem darin gezeigten beispielhaften Ablaufschema für den Anwendungsfall der Branderkennung, mögliche auf die Klassifizierung der detektierten Partikel folgende Schritte dargestellt. Diese Schritte sind rein optional und speziell für die Verwendung des erfindungsgemäßen Klassifizierungsverfahrens zur Branderkennung vorgesehen. Demnach wird, sofern die detektierten Partikel der dritten Partikelklasse S₃ zugeordnet, also als Störungsgröße klassifiziert worden sind (nuisance = Y) das Verfahren vom Start an, mit der Detektion von Partikeln im Partikeldetektionsmodus fortgesetzt. Sofern die detektierten Partikel nicht als Störgröße erkannt werden (nuisance = N) und gleichzeitig der Wert des ersten Lichtintensitätssignals I₁ eine zuvor festgesetzte Alarmschwelle I_{A} überschreitet (I₁ > I_{A} = Y), wird eine Alarmmeldung ausgegeben. Sofern die Alarmschwelle I_{A} nicht überschritten wird (I₁ > I_{A} = Y), wird das Verfahren ebenfalls vom Start an fortgesetzt.

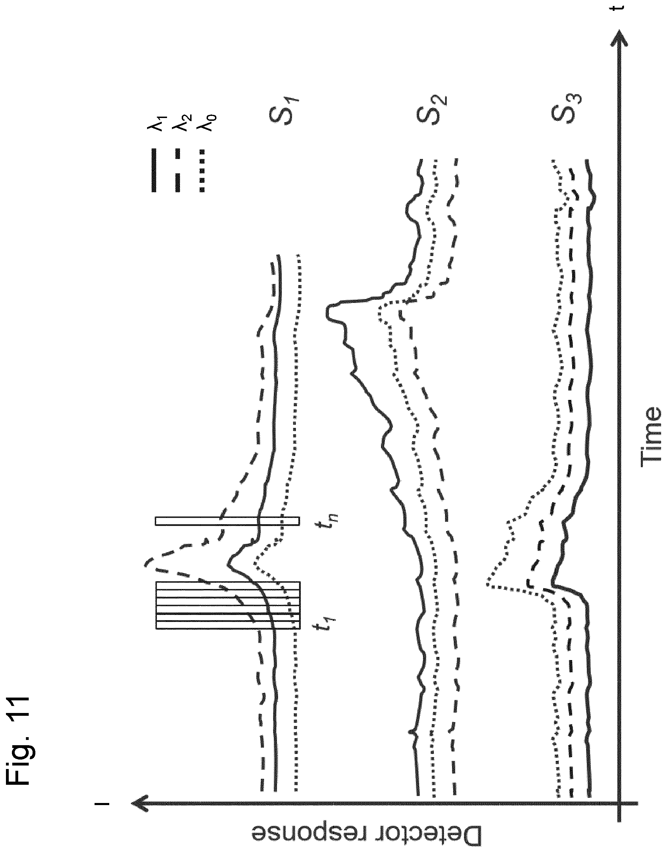

Schließlich ist der Figur 11 eine beispielhafte Auftragung der Lichtintensität I über die Zeit t, der von dem Lichtempfänger 220 ermittelten Lichtintensitätssignale I₁, I₂, I₀ für die erste und die zweite charakteristische Wellenlängen λ₁, λ₂, sowie die charakteristische Referenz-Wellenlänge λ₀ zu entnehmen. Der entsprechende Werteverlauf ist innerhalb desselben Diagramms für drei unterschiedliche Partikelklassen S₁, S₂, S₃ dargestellt. Zu erkennen ist ein für die jeweilige Partikelklasse S₁, S₂, S₃ spezifischer Anstieg, und zwar aller, auf den jeweiligen charakteristischen Wellenlängen λ₁, λ₂, λ₀ beruhenden Lichtintensitätssignale I₁, I₂, I₀. Für die erste Partikelklasse sind ferner aufeinanderfolgende Zeitpunkte t₁, t₂, ..., tₙ eingezeichnet, zu welchen die Lichtintensitätssignale I₁, I₂, I₀ jeweils ermittelt worden sind. Die so erhaltenen Daten für gewünschte Partikelklassen S₁, S₂, S₃ können zur Kalibrierung, also zur Erstellung der Klassifizierungskarte 130 verwendet werden. Hierzu werden die zu den aufeinanderfolgenden Zeitpunkten t₁, t₂, ..., tₙ ermittelten Lichtintensitäten I₁, I₂, I₀. bzw. die daraus gebildeten Relationswerte I₁/I₀, I₂/I₀ in die Klassifizierungskarte 130 eingetragen. Die so entstehenden Werte-Cluster bilden die Grundlage zur Festlegung der den jeweiligen Partikelklassen S₁, S₂, S₃ entsprechenden Bereiche 131 ,132 133.

### Bezugszeichenliste

- 110: gemeinsamer Lichtpfad
- 111: Lichtpfad des Lichtsenders
- 120: gemeinsamer Einfallsbereich
- 121: Einfallsbereich des Lichtempfängers
- 130: Klassifizierungskarte
- 131: erster Bereich der Klassifizierungskarte
- 132: zweiter Bereich der Klassifizierungskarte
- 133: dritter Bereich der Klassifizierungskarte

- 200: Partikeldetektionseinheit
- 201: Gehäuse
- 202: Detektionskammer
- 203: Grundplatte, insbesondere Leiterplatte
- 204: optisches Mittel, insbesondere Linse

- 210: Lichtsender
- 211: optische Achse des Lichtsenders

- 220: Lichtempfänger
- 221: optische Achse des Lichtempfängers
- 230: Steuerungsmodul
- 231: Speicherelement

- 240: Referenz-Lichtquelle, insbesondere LED-Chip einer Leuchtdiode
- 241: erste Lichtquelle, insbesondere LED-Chip einer Leuchtdiode
- 242: zweite Lichtquelle, insbesondere LED-Chip einer Leuchtdiode
- 24n: weitere Lichtquellen, insbesondere LED-Chips einer Leuchtdiode

- 250: Referenz-Lichtsensor, insbesondere Photo-Chip einer Photodiode
- 251: erster Lichtsensor, insbesondere Photo-Chip einer Photodiode
- 252: zweiter Lichtsensor, insbesondere Photo-Chip einer Photodiode

- 300: Ansaugpartikelerkennungssystem
- 310: Rohr- und/oder Schlauchleitung
- 320: Ansaugöffnung
- 330: Strömungspfad
- 340: Strömungsmittel, insbesondere Lüfter

- cₘₐₓ,: maximale Wahrscheinlichkeit
- cₘᵢₙ: minimale Wahrscheinlichkeit
- DB: Detektionsbereich
- I: Lichtintensität
- I_{A}: Alarmschwelle
- I₁: erstes Lichtintensitätssignal
- I₂: zweites Lichtintensitätssignal
- I₀: Referenz-Lichtintensitätssignal
- I₁/I₀, I₂/I₀: Relationswert
- S₁, S₂, S₃: Partikelklassen

- smoke: Rauch
- nuisance: Täuschungsgröße

- Y: Ja
- N: Nein

- α: Streulichtwinkel
- λ₀: charakteristische Referenz-Wellenlänge, insbesondere im Grünbereich
- λ₁: erste charakteristische Wellenlänge, insbesondere im Blaubereich
- λ₂: zweite charakteristische Wellenlänge, insbesondere im Infrarot- oder Rotbereich
- λₙ: weitere charakteristische Wellenlängen

## Patentansprüche

1. Verfahren zur Klassifizierung von mittels einer Partikeldetektionseinheit (200) detektierten Partikeln, welche Partikeldetektionseinheit (200) einen Lichtsender (210) zum Aussenden von Licht und einen Lichtempfänger (220) zum Erfassen von zumindest einem Teil des ausgesendeten Lichts aufweist, wobei der Lichtsender (210) und der Lichtempfänger (220) einen Detektionsbereich (DB) definierend zueinander ausgerichtet sind,
**dadurch gekennzeichnet, dass**
innerhalb des Detektionsbereichs (DB) detektierte Partikel klassifiziert werden, wobei
- mindestens ein erstes Lichtintensitätssignal (I₁) und ein zweites Lichtintensitätssignal (I₂), welche auf von dem Lichtempfänger (220) erfasstem Licht einer ersten charakteristischen Wellenlänge (λ₁) und einer von der ersten charakteristischen Wellenlänge (λ₁) abweichenden zweiten charakteristischen Wellenlänge (λ₂) basieren, ermittelt werden,
- ein weiteres, ein Referenz-Lichtintensitätssignal (I₀) ermittelt wird, welches auf von dem Lichtempfänger (220) erfasstem Licht einer charakteristischen Referenz-Wellenlänge (λ₀) basiert, die von der ersten und der zweiten charakteristischen Wellenlänge (λ₁, λ₂) abweicht,
- das mindestens erste und zweite Lichtintensitätssignal (I₁, I₂), jeweils in Relation, insbesondere ins Verhältnis zu dem Referenz-Lichtintensitätssignal (I₀) gesetzt wird,
- die so erhaltenen Relationswerte (I₁/I₀, I₂/I₀) in eine Klassifizierungskarte (130) eingeordnet werden, und
- anhand der Einordnung innerhalb der Klassifizierungskarte (130) eine Zuordnung der detektierten Partikel zu einer definierten Partikelklasse (S₁, S₂, S₃) erfolgt.

2. Klassifizierungsverfahren nach Anspruch 2,
**dadurch gekennzeichnet, dass**
die aus den Lichtintensitätssignalen (I₁, I₂, I₀) gebildeten Relationswerte (I₁/I₀, I₂/I₀) jeweiligen, die Klassifizierungskarte (130) definierenden Achsen zugeordnet werden.

3. Klassifizierungsverfahren nach einem der Ansprüche 1 oder 2,
**dadurch gekennzeichnet, dass**
in der Klassifizierungskarte (130) enthaltene und einer definierten Partikelklasse (S₁, S₂, S₃) zugeordnete Bereiche (131, 132, 133) auf physikalischen Größen basierend, insbesondere vorab ermittelt werden.

4. Klassifizierungsverfahren nach Anspruch 3,
**dadurch gekennzeichnet, dass**
die Bereiche (131, 132, 133) der Klassifizierungskarte (130) anhand von für die zu definierende Partikelklasse (S₁, S₂, S₃) spezifischen und von dem Lichtempfänger (220) erfassten Charakteristika im elektromagnetischen Spektrum.

5. Klassifizierungsverfahren nach einem der vorhergehenden Ansprüche,
**dadurch gekennzeichnet, dass**
die charakteristischen Wellenlängen (λ₁, λ₂, λ₀) des von dem Lichtempfänger (220) erfassten Lichts durch mindestens zwei Lichtquellen (241, 242) und eine Referenzlichtquelle (240) des Lichtsenders (210) definiert werden, wobei jede der Lichtquellen (241, 242, 240) Licht einer jeweiligen charakteristischen Wellenlänge (λ₁, λ₂, λ₀) aussendet.

6. Klassifizierungsverfahren nach einem der vorhergehenden Ansprüche,
**dadurch gekennzeichnet, dass**
die charakteristischen Wellenlängen (λ₁, λ₂, λ₀) des von dem Lichtempfänger (220) erfassten Lichts durch mindestens zwei Lichtsensoren (251, 252) und einen Referenzlichtsensor (250) des Lichtempfängers (220) definiert werden, wobei jeder der Lichtsensoren (251, 252, 250) zum Erfassen von Licht einer jeweiligen charakteristischen Wellenlänge (λ₁, λ₂, λ₀) konfiguriert ist.

7. Klassifizierungsverfahren nach einem der Ansprüche 5 oder 6,
**dadurch gekennzeichnet, dass**
das von den mindestens zwei Lichtquellen (241, 242) und der Referenzlichtquelle (240) ausgesendete Licht einen gemeinsamen Lichtpfad (110) entlang der optischen Achse (211) des Lichtsenders (210) definierend einander zumindest teilweise überlagert und/oder das von den mindestens zwei Lichtsensoren (251, 252) und dem Referenzlichtsensor (250) erfasste Licht einen gemeinsamen Einfallsbereich (120) entlang der optischen Achse (221) des Lichtempfängers (220) definierend einander zumindest teilweise überlagert.

8. Klassifizierungsverfahren nach einem der vorhergehenden Ansprüche,
**dadurch gekennzeichnet, dass**
das Licht jeweiliger charakteristischer Wellenlänge (λ₁, λ₂, λ₀) von dem Lichtempfänger (220) zeitgleich oder zeitlich aufeinanderfolgend erfasst wird.

9. Klassifizierungsverfahren nach einem der vorhergehenden Ansprüche,
**dadurch gekennzeichnet, dass**
die charakteristischen Wellenlängen (λ₁, λ₂, λ₀) des von dem Lichtempfänger (220) erfassten Lichts im Infrarot- oder Rotbereich, im Grünbereich und/oder im Blaubereich liegen.

10. Klassifizierungsverfahren nach Anspruch 9,
**dadurch gekennzeichnet, dass**
- das Licht mit der ersten charakteristischen Wellenlänge (λ₁), insbesondere im Blaubereich zur kontinuierlichen Detektion von Partikeln mittels der Partikeldetektionseinheit (200) verwendet wird, wobei im Detektionsbereich (DB) befindliche Partikel anhand einer Veränderung dessen Lichtintensitätssignals (I₀) erkannt werden,
- das Licht mit der zweiten charakteristischen Wellenlänge (λ₂), insbesondere im Infrarot- oder Rotbereich und mit der charakteristischen Referenz-Wellenlänge (λ₀), insbesondere im Grünbereich zur Klassifizierung der detektierten Partikel verwendet wird, wobei die von dem Lichtempfänger (220) erfasste Lichtintensität des Lichts mit der charakteristischen Referenz-Wellenlänge (λ₀), insbesondere im Grünbereich als Referenz-Lichtintensitätssignal (I₀) ermittelt wird, und die von dem Lichtempfänger (220) erfasste Lichtintensität des Lichts mit der ersten charakteristischen Wellenlänge (λ₁), insbesondere im Blaubereich und der zweiten charakteristischen Wellenlänge (λ₂), insbesondere im Infrarot- oder Rotbereich als erstes sowie zweites Lichtintensitätssignal (I₁, I₂) ermittelt und zu dem vom Lichtempfänger (220) ermittelten Lichtintensitätssignal (I₀) des Lichts mit charakteristischer Referenz-Wellenlänge (λ₁), insbesondere im Grünbereich in Relation, insbesondere ins Verhältnis gesetzt wird.

11. Klassifizierungsverfahren nach einem der vorhergehenden Ansprüche,
**dadurch gekennzeichnet, dass**
das Verfahren als eine Programmierung auf einem Speicherelement (231) eines Steuerungsmoduls (230) der Partikeldetektionseinheit (200) hinterlegt ist, wobei das Steuerungsmodul (230) signalübertragend mit dem Lichtsender (210) verbunden ist, um diesen zum Aussenden von Licht anzusteuern, und signalübertragend mit dem Lichtempfänger (220) verbunden ist, um die vom Lichtempfänger (220) erfassten Lichtintensitätssignale (I₁, I₂, I₀) zu empfangen.

12. Partikeldetektionseinheit (200) mit einem Lichtsender (210) zum Aussenden von Licht entlang eines Lichtpfads (110, 111) und einem Lichtempfänger (220) zum Erfassen von zumindest einem Teil des ausgesendeten Lichts innerhalb eines Einfallsbereichs (120, 121) sowie einem signalübertragend mit dem Lichtsender (210) und dem Lichtempfänger (220) verbundenen Steuerungsmodul (230), wobei der Lichtsender (210) und der Lichtempfänger (220) einen Detektionsbereich (DB) definierend zueinander ausgerichtet sind und das Steuerungsmodul (230) zur Detektion von im Detektionsbereich (DB) befindlichen Partikeln anhand des von dem Lichtempfänger (220) erfassten Lichts konfiguriert ist,
**dadurch gekennzeichnet, dass**
- der Lichtsender (210) mindestens eine erste Lichtquelle (241), die zum Aussenden von Licht einer ersten charakteristischen Wellenlänge (λ₁) konfiguriert ist, und eine zweite Lichtquelle (242), die zum Aussenden von Licht einer zweiten charakteristischen Wellenlänge (λ₂) konfiguriert ist, sowie eine Referenz-Lichtquelle (240) aufweist, die zum Aussenden von Licht einer charakteristischen Referenz-Wellenlänge (λ₀) konfiguriert ist, und/oder
- der Lichtempfänger (220) mindestens einen ersten Lichtsensor (251), der zum Erfassen von Licht einer ersten charakteristischen Wellenlänge (λ₁) konfiguriert ist, und einen zweiten Lichtsensor (252), der zum Erfassen von Licht einer zweiten charakteristischen Wellenlänge (λ₂) konfiguriert ist, sowie einen Referenz-Lichtsensor (250) aufweist, der zum Erfassen von Licht einer charakteristischen Referenz-Wellenlänge (λ₀) konfiguriert ist, wobei
- die erste und die zweite Lichtquelle (241, 242) sowie die ReferenzLichtquelle (240) des Lichtsenders (210) derart zueinander ausgerichtet sind, dass das jeweils ausgesendete Licht einen gemeinsamen Lichtpfad (110) entlang der optischen Achse (211) des Lichtsenders (210) definierend einander zumindest teilweise überlagert, und/oder
- der erste und der zweite Lichtsensor (251, 252) sowie der ReferenzLichtsensor (250) des Lichtempfängers (220) derart zueinander ausgerichtet sind, dass das von dem jeweiligen Lichtsensor (250, 251, 252) erfassbare Licht einen gemeinsamen Einfallsbereich (120) entlang der optischen Achse (221) des Lichtempfängers (220) definierend einander zumindest teilweise überlagert, und wobei
- zur Definition des Detektionsbereichs (DB) der Einfallsbereich (121) oder gemeinsame Einfallsbereich (120) des Lichtempfängers (220) auf den gemeinsamen Lichtpfad (110) des Lichtsenders (210) ausgerichtet ist oder der Lichtpfad (111) oder gemeinsame Lichtpfad (110) des Lichtsenders (210) auf den gemeinsamen Einfallsbereich (120) des Lichtempfängers (220) ausgerichtet ist.

13. Partikeldetektionseinheit (200) nach Anspruch 12,
**dadurch gekennzeichnet, dass**
die Lichtquellen (240, 241, 242) und/oder die Lichtsensoren (250, 251, 252) durch jeweils zugeordnete Filter zum Aussenden bzw. zum Erfassen von Licht einer jeweiligen charakteristischen Wellenlänge (λ₁, λ₂, λ₀) konfiguriert sind.

14. Partikeldetektionseinheit (200) nach einem der Ansprüche 12 oder 13,
**dadurch gekennzeichnet, dass**
der Lichtsender (210) als Leuchtdiode und der Lichtempfänger (220) als Photodiode ausgebildet ist, wobei der Lichtsender (210) mindestens einen ersten LED-Chip (241), einen zweiten LED-Chip (242) und einen Referenz-LED-Chip (240) und/oder der Lichtempfänger (220) mindestens einen ersten Photo-Chip (251), einen zweiten Photo-Chip (252) und einen Referenz-Photo-Chip (250) umfasst.

15. Partikeldetektionseinheit (200) nach Anspruch 14,
**dadurch gekennzeichnet, dass**
der erste und der zweite LED-Chip (241, 242) sowie der Referenz-LED-Chip (243) unmittelbar zueinander benachbart auf einer gemeinsamen Grundplatte (203) angeordnet sind und deren jeweils ausgesendetes Licht mittels eines optischen Mittels (204) entlang einer gemeinsamen optischen Achse (211) ausgerichtet und/oder gebündelt ist.

16. Partikeldetektionseinheit (200) nach einem der Ansprüche 14 oder 15,
**dadurch gekennzeichnet, dass**
der erste und der zweite Photo-Chip (251, 252) sowie der Referenz-Photo-Chip (250) unmittelbar zueinander benachbart auf einer gemeinsamen Grundplatte (203) angeordnet sind und deren jeweiliger Einfallsbereich mittels eines optischen Mittels (204) entlang einer gemeinsamen optischen Achse 221) ausgerichtet und/oder gebündelt ist.

17. Partikeldetektionseinheit (200) nach einem der Ansprüche 12 bis 16,
**dadurch gekennzeichnet, dass**
die Lichtquellen (240, 241, 242) des Lichtsenders (210) mit dem Lichtempfänger (220) jeweils denselben Streulichtwinkel (α) einschließen und zur Definition eines einzigen, identischen Detektionsbereichs (DB) jeweils auf den Einfallsbereich (120, 121) des Lichtempfängers (220) ausgerichtet sind.

18. Partikeldetektionseinheit (200) nach einem der Ansprüche 12 bis 17,
**dadurch gekennzeichnet, dass**
die Lichtsensoren (250, 251, 252) des Lichtempfängers (220) mit dem Lichtsender (210) jeweils denselben Streulichtwinkel (α) einschließen und zur Definition eines einzigen, identischen Detektionsbereichs (DB) jeweils auf den Lichtpfad (110, 111) des Lichtsenders (210) ausgerichtet sind.

19. Partikeldetektionseinheit (200) nach einem der Ansprüche 12 bis 18,
**dadurch gekennzeichnet, dass**
das Steuerungsmodul (230) ein Speicherelement (231) aufweist, welches eine Programmierung zur Durchführung eines Verfahrens nach einem der Ansprüche 1 bis 11 umfasst.

20. Partikeldetektionseinheit (200) nach einem der Ansprüche 12 bis 19,
**dadurch gekennzeichnet, dass**
die Partikeldetektionseinheit (200) Bestandteil eines Ansaugpartikelerkennungssystems (300) mit mindestens einer Rohr- und/oder Schlauchleitung (310), die über eine oder mehrere Ansaugöffnungen (320) zur jeweiligen Entnahme einer Fluidprobe in einen oder mehrere Überwachungsbereiche mündet, ist, wobei der Lichtsender (210) und der Lichtempfänger (220) einen Detektionsbereich (DB) innerhalb eines von den Fluidproben durchströmbaren Strömungspfads (330) definierend zueinander ausgerichtet sind.
